# EUROPÄISCHE PATENTANMELDUNG

(11) **EP 3 594 736 A1**
(43) Veröffentlichungstag der Anmeldung: **15.01.2020**
(21) Anmeldenummer: 18183108.2
(22) Anmeldetag: 12.07.2018
(51) Int. Cl.: G02C 13/00

(54) **BILDAUFNAHMESYSTEM UND ANPASSSYSTEM**

(71) Anmelder: Carl Zeiss Vision International GmbH, 73430 Aalen (DE)
(72) Erfinder: Carls, Jörg, 73655 Plüderhausen (DE); Schwarz, Oliver, 73479 Ellwangen (DE); Gamperling, Michael, 89340 Leipheim (DE); Kubitza, Matthias, 73434 Aalen (DE)
(74) Vertreter: Carl Zeiss AG - Patentabteilung

(57) **Zusammenfassung**

Die Erfindung betrifft ein Bildaufnahmesystem (1000), mit welchem Bilder des Gesichts einer Person über einen horizontalen Betrachtungswinkelbereich von nicht mehr als 240° und/oder einen vertikalen Betrachtungswinkelbereich von nicht mehr als 10° aufgenommen werden können. Nach der Erfindung ist ein lösbar verbindbares Zusatzmodul (100) vorhanden, welches den horizontalen Betrachtungswinkelbereich auf 360° und/oder den vertikalen Betrachtungswinkelbereich um mindestens 10° erweitert.

Die Erfindung betrifft weiter ein Zusatzmodul (100) für ein Bildaufnahmesystem (1000), mit welchem Bilder des Gesichts einer Person über einen horizontalen Betrachtungswinkelbereich von nicht mehr als 240° aufgenommen werden können. Erfindungsgemäß weist das Zusatzmodul eine insbesondere mechanische Schnittstelle (M1) zum lösbaren verbinden des Zusatzmoduls (100) mit dem Bildaufnahmesystem (1000) und eine Einrichtung (2, 2a, 2b, 6), um den horizontalen Betrachtungswinkelbereich des Bildaufnahmesystems (1000) auf 360° und/oder den vertikalen Betrachtungswinkelbereich des Bildaufnahmesystems (1000) um mindestens 10° zu erweitern, auf.

## Beschreibung

Die Erfindung bezieht sich auf Bildaufnahmesystem nach dem Oberbegriff des Patentanspruchs 1 sowie auf ein Anpasssystem zum virtuellen Anpassen einer Brillenfassung an den Kopf eines Brillenträgers mit einem Zentriersystem zum Bestimmen von Zentrierparametern für das Zentrieren eines Brillenglases in einer Brillenfassung nach dem Oberbegriff des Patentanspruchs 15. Die Erfindung bezieht sich ferner auf ein Zusatzmodul nach dem Oberbegriff des Patentanspruchs 16.

Unter https://3druck.com/scanner/fuel3d-stellt-einige-interessante-konzepte-auf-der-ces-2016-vor-0840831/, heruntergeladen am 20.3.2018, entnimmt man einen 360° 3D-Kopfscanner, aus dessen Aufnahmen 3D Modelle des Kopfes einer Person berechnet werden können. Der 360° 3D Scanner soll potentielle Anwendung im Bereich der Visual Effects Erstellung, personalisierte Kopfbedeckungen, Computerspielen und Virtual Reality finden.

Unter https://www.youtube.com/watch?v=MkgTVzfhE2Q, heruntergeladen am 20.3.2018, sowie unter http://www.i3du.gr/pdf/easytwin.pdf , heruntergeladen am 11.06.2018, entnimmt man einen 3D Gesichtsscanner, aus dessen Aufnahmen 3D Modelle des Gesichts einer Person berechnet werden können. Im Gegensatz zu dem vorstehend angegebenen System wird nur etwa ein Winkelbereich von 180° des Kopfes der Person erfasst.

Die WO 01/88654 A2 beschreibt ein Brillenanpassungssystem und verschiedene Verfahren, die zur computerunterstützten Brillenanpassung hilfreich sind. Das System bietet die Möglichkeit der virtuellen Anprobe einer Brille. Diese basiert auf einer dreidimensionalen fotorealistischen Darstellung des Kopfes des Brillenträgers mit einer aus einer Datenbank selbst ausgewählten Brillenfassung und mit seinen Bedürfnissen Rechnung tragenden Brillengläsern. Der Brillenträger kann den Betrachtungswinkel selbst wählen und die dreidimensionale fotorealistische Darstellung drehen und zoomen, so dass diese der Wahrnehmung eines den Brillenträger betrachtenden physischen Dritten ähnelt. Die Brille kann virtuell in gleicher Weise auf dem Kopf des Brillenträgers platziert werden, wie in der Realität. Des Weiteren bietet das System die Möglichkeit der virtuellen Darstellung der Wahrnehmung einer Szene des die Brille mit den ausgewählten Brillengläsern selbst bestimmungsgemäß tragenden Trägers.

Das Brillenanpassungssystem umfasst ein Bildaufnahmesystem, mit welchem Bilder des Gesichts des Brillenträgers über einen großen Betrachtungswinkelbereich aufgenommen werden können. Beispielhaft offenbart das Dokument ein Bildaufnahmesystem mit drei stereoskopischen Kamerapaaren, die in einer horizontalen Ebene angeordnet sind. Die Aufnahmerichtungen der beiden seitlich angeordneten stereoskopischen Kamerapaare schließen mit der Aufnahmeeinrichtung des frontal auf das Gesicht des Brillenträgers ausgerichteten stereoskopischen Kamerapaars einen Winkel von etwa 70° ein.

Ferner umfasst das Brillenanpassungssystem einen 3D-Gesichtsmodellierer zur Erzeugung eines virtuellen räumlichen Modells des Gesichts des Brillenträgers aus den von dem Bildaufnahmesystem aufgenommenen Bildern und einen Merkmalsextraktor zum Entnehmen von biometrischen Merkmalen des Gesichts des Brillenträgers. Die Erzeugung eines virtuellen räumlichen Modells des Gesichts des Brillenträgers aus den von dem Bildaufnahmesystem aufgenommenen Bildern umfasst einen Registrierungsprozess, um die von dem Bildaufnahmesystem aufgenommenen Bilder in Übereinstimmung zu bringen, und einen Rekonstruktionsprozess, der aus den in Übereinstimmung gebrachten Bildern das virtuelle räumliche Modell des Gesichts des Brillenträgers generiert.

Weiterer Bestandteil des Brillenanpassungssystems sind eine Einrichtung zur Brillenfassungsanpassung und eine Einrichtung zur Brillenglasanpassung. Die Einrichtung zur Brillenfassungsanpassung dient zur Selektion von geeigneten Brillenfassungen aus den in der Datenbank hinterlegten dreidimensionalen Brillenfassungsmodellen. Die Einrichtung zur Brillenglasanpassung umfasst zum Einen eine Teileinheit zur Bestimmung der für den Brillenträger erforderlichen und/oder gewünschten optischen Eigenschaften und zum Anderen eine Teileinheit zur Bestimmung von Zentrierparametern.

Schließlich sind Bestandteil des Brillenanpassungssystems eine Bildsyntheseeinrichtung, um aus den Daten des virtuellen räumlichen Modells des Gesichts, den Daten des virtuellen räumlichen Modells der gewählten Brillenfassung und den Daten des virtuellen räumlichen Modells des gewünschten Brillenglases für eine Darstellung geeignete Daten zu generieren und diese auf einer Anzeigeeinrichtung, welche ebenfalls Bestandteil des Brillenanpassungssystems ist, zur Anzeige zu bringen.

Die US 2005/0162419 A1 beschreibt ein ähnliches Brillenanpassungssystem wie das zuvor beschriebene. Dieses virtuelle, mit einem Computernetzwerk verbundene Simulationssystem erzeugt ein 3D-Gesichtsmodell eines Benutzers, fügt das Gesichtsmodell und vom Benutzer ausgewählt 3D-Brillenmodelle zusammen und simuliert sie grafisch mit Hilfe einer Datenbank, die die Informationen von Benutzern, Produkten, 3D-Modellen und Wissensbasis speichert. Das obige System besteht aus folgende Einheiten: Einer Benutzerdatenverarbeitungseinheit zur Identifizierung des Benutzers, der Zugriff auf das Simulationssystem haben muss, und um ein 3D-Gesichtsmodell des Benutzers zu erzeugen; eine grafische Simulationseinheit, mit der ein Benutzer ein 3D-Brillenmodell das erzeugt wird, wenn der Benutzer ein Produkt in der Datenbank auswählt, visualisieren und automatisch im dreidimensionalen Raum auf einem Gesichtsmodell des Benutzers anordnen und anpassen kann, welches in einem Benutzerdatenverarbeitungsmodul erstellt wurde; eine intelligente CRM (Customer Relation Management) -Einheit, die den Benutzer mit Hilfe einer Wissensbasis anleiten kann, welche Beratungsinformationen mit von Modeexperten erworbenem Wissen, Kaufgewohnheiten und Kundenverhalten bei verschiedenen Produkten bereitstellt. Sowohl das 3D-Gesichtsmodell als auch die 3D-Brillenmodelle lassen sich deformieren, um z.B. menschliche Gesichtsausdrücke zu erzeugen oder Brillenfassungen an die Kopf- und Gesichtsform des Benutzers anzupassen. Die Haare und die Gesichtsfarbe des 3D-Geesichtsmodells lassen sich verändern. Auch die Größe, das Design, die Oberflächenbeschaffenheit und die Farbe der Brillenfassungen können verändert werden.

Die beiden vorstehend beschriebenen virtuellen Brillenanpassungssysteme, von denen die Erfindung ausgeht, beschränken sich auf das Anpassen von Brillenfassungen, die vom Hersteller als dreidimensionale Brillenfassungsmodelle in einer Datenbank hinterlegt sind.

Die US 2015/0362761 A1 beschreibt ein Brillenanpassungssystem, welches sich ebenfalls dreidimensionaler Modelle von Brillenfassungen bedient. Das jeweilige gewünschte dreidimensionale Brillenfassungsmodell wird aber nicht zwangsläufig einer entsprechenden Datenbank mit einer Vielzahl an dreidimensionalen Brillenfassungsmodellen entnommen, sondern es wird ggf. nach Bedarf aus zweidimensionalen Bildern einer Brillenfassung, die aus unterschiedlichen Quellen stammen können, ein dreidimensionales Modell der Brillenfassung erzeugt. Danach erfolgt eine virtuelle Brillenanpassung der vorstehend beschriebenen Art.

Die FR2978841 A1 vertritt die Auffassung, dass virtuelle Brillenanpassungssysteme, bei denen Fotos einer Person aufgenommen würden und nachfolgend ein digitales Bild der Person und ein digitales Bild einer Brillenfassung aus einer Datenbank in überlagerter Darstellung zur Anzeige gebracht würden, komplexer Bildverarbeitungsalgorithmen bedürften und aufwändig an Zeit und Ressourcen wären. Außerdem zöge es die Person vor, die Fassung vor dem Kauf anzufassen und zu tragen, um insbesondere feststellen zu können, ob Gewicht, Robustheit, Komfort und Stabilität der Brillenfassung den Bewegungen des Kopfes entspricht. Die FR2978841 A1 schlägt daher ein tragbares Gerät mit z.B. drei in einer horizontalen Ebene angeordneten Digitalkameras vor, welches einen Brillenträger mit aufgesetzter Brille aus unterschiedlichen Aufnahmerichtungen aufnehmen kann. Aus den aufgenommenen Bildern wird dann ein virtuelles räumliches Modell des Brillenträgers mit getragener Brille generiert. Durch Bildsynthese wird dann ein fotorealistisches Bild erzeugt und dem Brillenträger beim Optiker oder zuhause zur Anzeige gebracht. Er kann wie bei dem vorstehend beschriebenen System nach der WO 01/88654 A2 das angezeigte Bild zoomen, bewegen und drehen. Weiterhin können dem Brillenträger mehrere Bilder mit unterschiedlichen Brillenfassungen zur Anzeige gebracht werden.

Die US 9,357,204 B2 beschreibt ein Verfahren zum Erzeugen von dynamischen dreidimensionalen photorealistischen Modellen, welches sich zur Visualisierung und Echtzeitbrillenanpassung eignet. Das Verfahren bedient sich eines Bildaufnahmesystems (3D Objekt Scanner) für Objekte, insbesondere Brillenfassungen, und eines Computers, der eine 3D Rekonstruktion durchführt. Das Bildaufnahmesystem umfasst neben (üblicherweise sechs) Kameras auch eine Beleuchtungseinrichtung und einen drehbaren Halter für die Brillenfassung. Jede Kamera des Bildaufnahmesystems nimmt eine Mehrzahl an Bildern auf während sich der Halter dreht. Zunächst erfolgt die Aufnahme einer Bildsequenz mit einem Target zur Kalibration des Systems im Hinblick auf Geometrie (Position, Orientierung und Entfernungen) und Farbe, dann die Aufnahme einer Bildsequenz mit dem Objekt, also z.B. der Brillenfassung, für das ein dreidimensionales photorealistisches Modell erstellt werden soll.

Die US 2003/0231175 A1 beschreibt ebenfalls ein Verfahren zum Erzeugen von dynamischen dreidimensionalen photorealistischen Modellen. Auch dieses Verfahren bedient sich eines Bildaufnahmesystems (3D Objekt Scanner) für Objekte und eines Computers zur 3D Rekonstruktion. Bei diesem Verfahren wird die Beleuchtung in besonderer Weise variiert, um eine photorealistisches Modell zu rekonstruieren.

Der https://3druck.com/scanner/fuel3d-stellt-einige-interessante-konzepte-auf-der-ces-2016-vor-0840831/, heruntergeladen am 20.3.2018, entnimmt man einen Hand-3D-Scanner der speziell für den Einsatz im Prothesenbau, Kosmetik und Schmuck entwickelt worden ist.

Weiterhin sind z.B. unter https://www.meditcompany.com/identica-home, https://www.kickstarter.com/projects/robocular/robocular-the-3d-scanner-for-everyone?ref=recently_launched, https://www.pocnetwork.net/product-reviews/review-matter-and-form-3d-scanner/ und https://www.matterhackers.com/store/printer-accessories/matter-and-form-3d-scanner, jeweils heruntergeladen am 20.3.2018, diverse 3D-Objekt-Scanner zu entnehmen, die in offenen oder geschlossenen Gehäusen angeordnet sind, und die eine Bildaufnahme über einen Winkelbereich von 360° gestatten.

Obwohl sich die vorstehend angegebenen Systeme dem Grunde nach bewährt haben, besteht ein Bedarf nach erstens höherer Flexibilität, zweitens Verringerung des Gesamt-Platzbedarfs der bislang zunächst getrennt aufzustellenden Systeme, und drittens ein Bedarf, Kosten einzusparen.

Die Aufgabe der Erfindung besteht nunmehr darin, ein Bildaufnahmesystem und ein Anpasssystem größerer Flexibilität bereitzustellen. Eine weitere Aufgabe der Erfindung besteht in der Bereitstellung eines Zusatzmoduls für ein Bildaufnahmesystem und/oder ein Anpasssystem, um dessen/deren Flexibilität zu erhöhen. Dabei kann als zusätzlicher Aspekt der Aufgabe der Platzbedarf aller Systeme in Summe verringert werden, ohne die Leistungsfähigkeit zu beschränken. Außerdem kann als ebenfalls zusätzlicher Aspekt der Kostenbedarf in Summe verringert werden.

Diese Aufgabe wird durch ein Bildaufnahmesystem mit den Merkmalen des Patentanspruchs 1 und ein Anpasssystem mit den Merkmalen des Patentanspruchs 15 gelöst. Vorteilhafte Ausführungen und Weiterbildungen der Erfindung sind Gegenstand der Unteransprüche. Die weitere Aufgabe wird durch ein Zusatzmodul mit den Merkmalen des Patentanspruchs 16 gelöst.

Insbesondere wird in Unteranspruch 3 eine Weiterbildung des Bildaufnahmesystems durch einen Halter mit weiteren Merkmalen eingeführt, mittels derer die Flexibilität noch weiter erhöht wird.

Das Bildaufnahmesystem, mit welchem Bilder des Gesichts einer Person über einen horizontalen Betrachtungswinkelbereich von nicht mehr als 240° und/oder in vertikaler Richtung in einem einzigen Betrachtungswinkel oder einem vertikalen Betrachtungswinkelbereich von nicht mehr als 10 Grad aufgenommen werden können, von dem die Erfindung ausgeht, ist erfindungsgemäß gekennzeichnet durch ein lösbar verbindbares Zusatzmodul, welches den vertikalen Betrachtungswinkelbereich um mindestens 10 Grad vergrößert. Alternativ oder zusätzlich kann auch der horizontale Betrachtungswinkelbereich auf bis zu 360° erweitert werden. Damit ist es möglich, nicht nur das Gesicht der Person zu erfassen, um daraus beispielsweise Informationen für die Erzeugung eines digitalisierten und maßhaltigen dreidimensionalen Gesichtsmodells zu gewinnen, sondern auch unter Benutzung des Zusatzmoduls Objekte, wie z.B. Accessoires und insbesondere Brillenfassungen, zu scannen und aus diesen Scandaten bzw. Bildaufnahmen ebenfalls ein maßhaltiges dreidimensionales Objektmodell zu generieren. Gesichtsmodell und Objektmodell zusammen können dann für die Generierung fotorealistischer Bilder verwendet werden. Derartige fotorealistische Bilder können beispielsweise für virtuelle Anproben verwendet werden, wie dies nachfolgend beispielhaft für Brillen und Brillengläser beschrieben wird.

Der Betrachtungswinkelbereich des Bildaufnahmesystems ist der durch die vom optischen Zentrum der Bildaufnahmeeinheiten ausgehenden Blickachsen der Bildaufnahmeeinheiten zum Betrachtungsmittelpunkt hin begrenzte Winkelbereich, in dem die Bildaufnahmeeinheiten, also insbesondere Kameras oder dergleichen, zum Betrachtungsmittelpunkt und zur Orientierung des Scanvolumens hin eine lückenlose Kette bildende Bilder der im Scanvolumen befindlichen Objekte aufnehmen können. Das Scanvolumen ist dabei der Bereich, der von den Bildaufnahmeeinheiten erfasst wird und in dem sich nach Konstruktion des Zusatzmoduls das zu scannende Objekt befinden kann. Das optische Zentrum einer Bildaufnahmeeinheit ist der Punkt kleinsten Abstands zu allen Blickachsen, die mit der Bildaufnahmeeinheit möglich sind.

Ist das momentane Scanvolumen während des Scanvorgangs konstruktionsbedingt (z.B. in Position und/oder Orientierung) relativ zu den Bildaufnahmeeinheiten veränderbar, insbesondere weil -wie z.B. in Unteranspruch 3 aufgeführt- im Zusatzmodul ein drehbarer oder verschiebbarer Halter zum Einsatz kommt, wird als Betrachtungsmittelpunkt des Scanvolumens derjenige Punkt des Scanvolumens bezeichnet, der den kürzesten Abstand zu allen Blickachsen aufweist, die das Scanvolumen schneiden und zu den Aufnahmezeitpunkten während des Scanvorgangs mit einer Hauptblickachse einer Bildaufnahmeeinheit übereinstimmen. Falls mehrere solche Punkte kürzesten Abstands existieren, so wird derjenige Punkt als Betrachtungsmittelpunkt gewählt, der zum Schwerpunkt des Scanvolumens den kürzesten Abstand aufweist. Als Hauptblickachse wird der zum Bildzentrum gehörende Sichtstrahl der jeweiligen Bildaufnahmeeinheit definiert.

Als horizontaler (respektive vertikaler) Betrachtungswinkelbereich wird der Betrachtungswinkelbereich verstanden, für den die Bilder der lückenlosen Bilderkette im Wesentlichen bezogen auf den Betrachtungsmittelpunkt des Scanvolumens in horizontaler (respektive vertikaler) Richtung aneinandergereiht sind. Ist in der horizontalen (respektive vertikalen) Richtung nur eine einzige Bildaufnahmeeinheit vorhanden und wird die räumliche Position und Orientierung des Scanvolumens inklusive der darin befindlichen Objekte während des Scanvorgangs in dieser Richtung relativ zu den Bildaufnahmeeinheiten nicht verändert, dann gibt es nur einen einzigen horizontalen (respektive vertikalen) Betrachtungswinkel. Wird das Scanvolumen zwischen zwei Aufnahmen bezüglich der Bildaufnahmeeinheiten in horizontaler (respektive vertikaler) Richtung gedreht, dann vergrößert sich der Betrachtungswinkelbereich jeweils um den Winkel, um den die Orientierung des Scanvolumens dabei geändert wurde. Wird das Scanvolumen zwischen zwei Aufnahmen in horizontaler (respektive vertikaler) Richtung verschoben, dann erhöht sich der Betrachtungswinkelbereich jeweils um den Winkel, um den der Betrachtungsmittelpunkt des Scanvolumens bezogen auf die Bildaufnahmeeinheit dabei versetzt wird.

Der horizontale Betrachtungswinkelbereich wird in der Projektion der beteiligten Punkte und Strahlen auf eine horizontale Ebene, also in der Draufsicht, gemessen. Der vertikale Betrachtungswinkelbereich wird der Projektion auf eine dazu senkrecht stehende Ebene durch den Betrachtungsmittelpunkt und die zentrale Kamera des Bildaufnahmesystems gemessen. Die Zentrale Kamera ist diejenige Kamera des Bildaufnahmesystems, die zu den optischen Zentren aller anderen Kameras des Bildaufnahmesystems den kleinsten Abstand hat. Sind die Kameras auf einem 360° Kreisbogen um den Betrachtungsmittelpunkt angeordnet, so kann eine beliebige Kamera als zentrale Kamera gewählt werden.

Die vorstehend vorgestellten Definitionen für den horizontalen Betrachtungswinkelbereich und den vertikalen Betrachtungswinkelbereich werden in der Figurenbeschreibung noch einmal unter Bezugnahme auf graphische Skizzen erläutert.

"Scannen (aus englisch [to] scan für '[das] Abtasten' oder 'Erfassen') oder Abscannen - als Vorgang - steht im Besonderen im Rahmen der vorliegenden Erfindung für die Benutzung eines Gerätes zur Datenerfassung und das berührungsfreie Abtasten von Objekten mit Aufnahmetechniken, siehe Sensorik (Technik)" (siehe https://de.wikipedia.org/wiki/Scanner, heruntergeladen am 15.3.2018).

Die Generierung eines dreidimensionalen Modells aus einer von dem Bildaufnahmesystem aufgenommenen Bildsequenz erfordert eine sogenannte Bildregistrierung. Bildregistrierung ist nach der Beschreibung aus https://de.wikipedia.org/wiki/Bildregistrierung, heruntergeladen am 15.3.2018, "ein wichtiger Prozess in der digitalen Bildverarbeitung und dient dazu, zwei oder mehrere Bilder derselben Szene, oder zumindest ähnlicher Szenen, bestmöglich in Übereinstimmung miteinander zu bringen. Dabei wird eines der Bilder als Referenzbild festgelegt, die anderen werden Objektbilder genannt. Um diese optimal an das Referenzbild anzupassen, wird eine ausgleichende Transformation berechnet. Die zu registrierenden Bilder unterscheiden sich voneinander, weil sie von unterschiedlichen Positionen, zu unterschiedlichen Zeitpunkten oder mit unterschiedlichen Sensoren aufgenommen wurden."

Ein System zur Generierung fotorealistischer Bilder umfasst erfindungsgemäß das Bildaufnahmesystem der vorstehend beschriebenen Art; einen Computer, welcher eingerichtet ist, aus einem von dem Bildaufnahmesystem aufgenommenen Objekt ein virtuelles dreidimensionales Modell zu berechnen und durch Bildsynthese aus dem virtuellen dreidimensionalen Modell ein fotorealistisches Bild zu generieren und eine Anzeige, welche eingerichtet ist, das fotorealistisches Bild anzuzeigen.

Nach https://de.wikipedia.org/wiki/Objekt_(Programmierung), https://de.wikipedia.org/wiki/Datei, https://de.wikipedia.org/wiki/Bildsynthese, https://en.wikipedia.org/wiki/Rendering_(computer_graphics), https://de.wikipedia.org/wiki/Rendern_(Design), https://de.wikipedia.org/wiki/Textur_(Oberfl%C3%A4chenattribut), https://de.wikipedia.org/wiki/Textur_(Computergrafik), https://de.wikipedia.org/wiki/Hypertext_Markup_Language, https://de.wikipedia.org/wiki/Scalable_Vector_Graphics, jeweils heruntergeladen am 15.3.2018, bezeichnet Bildsynthese oder Rendern (von englisch (to) render, deutsch etwas machen oder auch etwas wiedergeben) in der Computergrafik die Erzeugung eines fotorealistischen oder nicht-fotorealistischen Bildes aus einem oder mehreren virtuellen räumlichen Modellen im zwei- oder dreidimensionalen Raum. Diese virtuellen räumlichen Modelle werden als Szene bezeichnet. Der Begriff "Rendern" oder "Bildsynthese" kann als Analogon zu einer Darstellung einer Szene durch einen Künstler angesehen werden.

Die der Szene zugrunde liegenden Daten werden regelmäßig in einer Szenedatei abgespeichert. Eine Szenedatei enthält sogenannte Objekte in einer streng definierten Sprache oder Datenstruktur, wie z.B. in Form von Hypertext Markup Language (HTML) oder Scalable Vector Graphics (SVG). Die Objekte oder Instanzen enthalten Geometrie-, Blickpunkt-, strukturelle Beschaffenheits-, Beleuchtungs- und Schattierungsinformationen als Beschreibungen der Szene.

Computerprogramme zur Bildsynthese bzw. zum Rendern von Bildern werden Renderer genannt. Unterschieden werden z. B. die Rendering Engine für Computerspiele, die HTML-Renderer etc.

Beim Rendern müssen üblicherweise folgende Aufgaben gelöst werden:
- die Ermittlung der vom virtuellen Betrachter aus sichtbaren Objekte (Verdeckungsberechnung)
- die Simulation des Aussehens von Oberflächen, beeinflusst durch deren strukturelle Beschaffenheit (Shading)
- die Berechnung der Lichtverteilung innerhalb der Szene, die sich unter anderem durch die indirekte Beleuchtung zwischen Körpern äußert.

Eingesetzt werden soll ein erfindungsgemäßes Bildaufnahmesystem insbesondere als Bestandteil eines Zentriersystems zum Bestimmen von Zentrierparametern zur Zentrierung eines Brillenglases in einer Brillenfassung.

Zentrierung bedeutet nach https://de.wiktionary.org/wiki/Zentrierung, heruntergeladen am 16.3.2018, die Ausrichtung eines Brillenglases in Bezug auf die Pupille des Brillenträgers. Zu diesem Zweck werden die sogenannten Zentrierparameter bestimmt, die für die Festlegung der Lage des Brillenglases in einer Brillenfassung notwendig sind. Zu diesen Zentrierparametern gehören insbesondere der Pupillenabstand, der nach 5.29 der DIN EN ISO 13666:2013-10 der Abstand zwischen den Mittelpunkten der Pupillen für den Fall ist, dass die Augen bei Blickrichtung geradeaus ein unendlich entferntes Objekt fixieren, der Hornhaut-Scheitel-Abstand, der nach Ziffer 5.27 der DIN EN ISO 13666:2013-10 der Abstand zwischen der Rückfläche des Brillenglases und dem Apex der Hornhaut gemessen in Blickrichtung senkrecht zur Fassungsebene ist, der Vorneigungswinkel oder pantoskopische Winkel, der nach Ziffer 5.18 der DIN EN ISO 13666:2013-10 der Winkel in der Vertikalebene zwischen der Normale zur Vorderfläche eines Brillenglases in dessen Mittelpunkt nach Kastensystem und der Fixierlinie des Auges in Primärposition, die üblicherweise als horizontal angenommen wird, ist, der Fassungsscheibenwinkel, welcher nach Ziffer 17.3 der DIN EN ISO 13666:2013-10 der Winkel zwischen der Fassungsebene und der rechten bzw. linken Scheibenebene ist und der Zentrierpunkt, der nach Ziffer 5.20 der DIN EN ISO 13666:2013-10 der Punkt ist, mit dem der optische Mittelpunkt, Konstruktionsbezugspunkt oder Anpasspunkt zusammenfallen soll, wenn kein verordnetes Prisma oder Dickenreduktionsprisma vorhanden ist oder wenn solche Prismen neutralisiert worden sind.

Das System zur Generierung fotorealistischer Bilder soll erfindungsgemäß insbesondere als Bestandteil eines Anpasssystems zum virtuellen Anpassen einer Brillenfassung an den Kopf eines Brillenträgers eingesetzt werden. Vorzugsweise ist auch ein Zentriersystem der vorstehend beschriebenen Art Bestandteil des Anpasssystems.

Beispielsweise soll das unter der Bezeichnung VISUFIT 1000 von der Anmelderin angebotene und beispielsweise in der europäischen Patentanmeldung 17153556.0 beschriebene Anprobe- und Vermessungssystem mehrere Funktionen erfüllen. Zum einen ist vorgesehen, mittels der verwendeten neun Kameras eine hochgenaue Brillenfassungs-Zentrierung realer Fassungen durchzuführen und damit die individuellen Zentrierparameter für den jeweiligen Brillenträger in Verbindung mit der ausgewählten Brillenfassung erheben. Zum anderen erlauben es die neun zueinander kalibrierten Kameras mit Hilfe dezidierter Software-Algorithmen, einen maßhaltigen digitalen 3D Avatar (180° Kopfscan) des Kopfes des Brillenträgers zu generieren, um dies für weitergehende Services anbieten zu können.

In der elektronischen Datenverarbeitung bezeichnet ein Avatar eine grafische Darstellung eines Benutzers, wie dies z.B. in https://en.wikipedia.org/wiki/Avatar_(computing), heruntergeladen am 16.3.2018, beschrieben ist.

Das Gerät erreicht bzgl. des menschlichen 3D Avatars, also der digitalisierten und maßhaltigen dreidimensionalen Repräsentation (Modell) des menschlichen Gesichtes, eine Maßhaltigkeit im Bereich von kleiner 0,3 mm. Diese Genauigkeit wird angestrebt, um mit entsprechend maßhaltigen digitalisierten Brillenfassungen einen "Virtual Try-On" durchführen zu können, ein Aufsetzen einer maßhaltigen 3D digitalisierten Brillenfassung auf den entsprechenden Avatar.

Die Bestimmung des Fern-Durchblickpunkts durch die Fassung nach ISO 13666:2012 muss insbesondere bei Gleitsichtbrillengläsern auf genau diese wenige Zehntel-Millimeter stimmen, um eine optimale Sehkorrektur zu ermöglichen. Das bedingt die entsprechende Maßhaltigkeit der digitalisierten Brillenfassung. Durch eine Erweiterung in Form eines erfindungsgemäßen Zusatzmodul ist es zusammen mit dem VISUFIT 1000 Gerät möglich, unabhängig vom menschlichen Kopf dezidierte Objekte (insbesondere Brillen-Fassungen, aber nicht nur) in drei Dimensionen zu scannen und maßhaltig zu digitalisieren und dabei in weiten Teilen auf die VISUFIT 1000
Scanning-Infrastruktur auf zu setzen. Die Digitalisierung von Brillenfassungen vor Ort durch den Optiker selbst wird durch dieses erfindungsgemäß vorgesehene Zusatzmodul ermöglicht.

Das Zusatzmodul für ein Bildaufnahmesystem, mit welchem Bilder des Gesichts einer Person über einen horizontalen Betrachtungswinkelbereich von nicht mehr als 240° aufgenommen werden können, zeichnet sich erfindungsgemäß demzufolge dadurch aus, dass es eine mechanische Schnittstelle zum lösbaren verbinden des Zusatzmoduls mit dem Bildaufnahmesystem und eine Einrichtung, um den horizontalen Betrachtungswinkelbereich des Bildaufnahmesystems auf 360° zu erweitern, aufweist.

Die eingangs gestellte Aufgabe wird durch die Bereitstellung des erfindungsgemäßen Zusatzmoduls bzw. die Ausstattung eines Bildaufnahmesystems mit einem vorstehend beschriebenen Zusatzmodul vollumfänglich gelöst. Die eingangs angegebenen zusätzlichen Aspekte der Aufgaben werden regelmäßig ebenfalls vollumfänglich gelöst.

In einer Ausführungsvariante der Erfindung ist vorgesehen, dass die eingangs beschriebene lösbare Verbindung wenigstens eine Verbindung aus der nachfolgend angegebenen Gruppe ist:
(i) eine Verbindung zur Übertragung von Daten zum Zusatzmodul
(ii) eine Verbindung zum Bereitstellen einer Energieversorgung für das Zusatzmodul
(iii) eine mechanische Verbindung.
Es wird also zusätzlich eine mechanische und eine elektrische Schnittstelle zum Bildaufnahmesystem, Zentriersystem und ggf. Anpasssystem bereitgestellt. Das Zusatzmodul ist durch diese Maßnahmen zur Bildaufnahme an dem Grundsystem fixiert kann auch über das Grundsystem mit elektrischer Energie versorgt und funktional angesteuert werden. Die mechanische Verbindung ist vorzugsweise so ausgeführt, dass das Zusatzmodul so an dem Bildaufnahmesystem fixiert ist, dass bei bestimmungsgemäßem Gebrauch keine eine Bildaufnahme eines Objekts über den Betrachtungswinkelbereich von 360° störende Relativbewegung zwischen Bildaufnahmesystem und Zusatzmodul möglich ist.

In einer anderen Ausführungsvariante sieht die Erfindung vor, dass das Zusatzmodul des Bildaufnahmesystems wenigstens eine Komponente aus der nachfolgend angegebenen Gruppe enthält:
(i) einen drehbaren Halter zum Halten eines Objekts im horizontalen Betrachtungswinkelbereich
(ii) einen drehbaren Halter zum Halten eines Objekts im horizontalen und vertikalen Betrachtungswinkelbereich
(iii) einen um eine vertikale Drehachse drehbaren Halter zum Halten eines Objekts im horizontalen Betrachtungswinkelbereich
(iv) einen um eine horizontale Drehachse drehbaren Halter zum Halten eines Objekts im horizontalen und vertikalen Betrachtungswinkelbereich
(v) einen um eine diagonal im Raum liegende Drehachse drehbaren Halter zum Halten eines Objekts im horizontalen und vertikalen Betrachtungswinkelbereich
(vi) einen verschiebbaren Halter zum Halten eines Objekts im horizontalen Betrachtungswinkelbereich
(vii)einen verschiebbaren Halter zum Halten eines Objekts im horizontalen und vertikalen Betrachtungswinkelbereich
(viii) einen linear verschiebbaren Halter zum Halten eines Objekts im horizontalen Betrachtungswinkelbereich
(ix) einen linear verschiebbaren Halter zum Halten eines Objekts im horizontalen und vertikalen Betrachtungswinkelbereich
(x) einen drehbaren und verschiebbaren Halter zum Halten eines Objekts im horizontalen Betrachtungswinkelbereich
(xi) einen drehbaren und verschiebbaren Halter zum Halten eines Objekts im horizontalen und vertikalen Betrachtungswinkelbereich
(xii)einen drehbaren und linear verschiebbaren Halter zum Halten eines Objekts im horizontalen Betrachtungswinkelbereich
(xiii) einen drehbaren und linear verschiebbaren Halter zum Halten eines Objekts im horizontalen und vertikalen Betrachtungswinkelbereich
(xiv) einen in vertikaler Richtung verschiebbaren Halter zum Halten eines Objekts im horizontalen Betrachtungswinkelbereich
(xv) einen in vertikaler Richtung verschiebbaren Halter zum Halten eines Objekts im horizontalen und vertikalen Betrachtungswinkelbereich
(xvi) einen in vertikaler Richtung linear verschiebbaren Halter zum Halten eines Objekts im horizontalen Betrachtungswinkelbereich
(xvii) einen in vertikaler Richtung linear verschiebbaren Halter zum Halten eines Objekts im horizontalen und vertikalen Betrachtungswinkelbereich
(xviii)einen um eine vertikale Drehachse drehbaren und in vertikaler Richtung linear verschiebbaren Halter zum Halten eines Objekts im horizontalen Betrachtungswinkelbereich
(xix) einen um eine vertikale Drehachse drehbaren und in vertikaler Richtung linear verschiebbaren Halter zum Halten eines Objekts im horizontalen und vertikalen Betrachtungswinkelbereich
(xx) einen um eine vertikale Drehachse drehbaren und in vertikaler und in horizontaler Richtung linear verschiebbaren Halter zum Halten eines Objekts im horizontalen und vertikalen Betrachtungswinkelbereich
(xxi) einen oder mehrere Spiegel und einen Halter zum Halten eines Objekts im horizontalen Betrachtungswinkelbereich
(xxii) einen oder mehrere Spiegel und einen Halter zum Halten eines Objekts im horizontalen und vertikalen Betrachtungswinkelbereich
(xxiii)einen oder mehrere Spiegel und einen verschiebbaren Halter zum Halten eines Objekts im horizontalen Betrachtungswinkelbereich
(xxiv) einen oder mehrere Spiegel und einen verschiebbaren Halter zum Halten eines Objekts im horizontalen und vertikalen Betrachtungswinkelbereich
(xxv) einen oder mehrere Spiegel und einen in horizontaler Richtung verschiebbaren Halter zum Halten eines Objekts im horizontalen Betrachtungswinkelbereich
(xxvi) einen oder mehrere Spiegel und einen in vertikaler Richtung verschiebbaren Halter zum Halten eines Objekts im horizontalen und vertikalen Betrachtungswinkelbereich
(xxvii) einen oder mehrere Spiegel und einen in horizontaler Richtung linear verschiebbaren Halter zum Halten eines Objekts im horizontalen Betrachtungswinkelbereich
(xxviii) einen oder mehrere Spiegel und einen in vertikaler Richtung linear verschiebbaren Halter zum Halten eines Objekts im horizontalen Betrachtungswinkelbereich
(xxix) einen oder mehrere Spiegel und einen drehbaren Halter zum Halten eines Objekts im horizontalen Betrachtungswinkelbereich
(xxx) einen oder mehrere Spiegel und einen um eine vertikale Drehachse drehbaren Halter zum Halten eines Objekts im horizontalen Betrachtungswinkelbereich
(xxxi) eine oder mehrere Kameras und einen Halter zum Halten eines Objekts im horizontalen Betrachtungswinkelbereich
(xxxii) eine oder mehrere Kameras und einen verschiebbaren Halter zum Halten eines Objekts im horizontalen Betrachtungswinkelbereich
(xxxiii)eine oder mehrere Kameras und einen in horizontaler Richtung verschiebbaren Halter zum Halten eines Objekts im horizontalen Betrachtungswinkelbereich
(xxxiv) eine oder mehrere Kameras und einen in vertikaler Richtung verschiebbaren Halter zum Halten eines Objekts im horizontalen Betrachtungswinkelbereich
(xxxv) eine oder mehrere Kameras und einen in horizontaler Richtung linear verschiebbaren Halter zum Halten eines Objekts im horizontalen Betrachtungswinkelbereich
(xxxvi) eine oder mehrere Kameras und einen in vertikaler Richtung linear verschiebbaren Halter zum Halten eines Objekts im horizontalen Betrachtungswinkelbereich
(xxxvii) eine oder mehrere Kameras und einen drehbaren Halter zum Halten eines Objekts im horizontalen Betrachtungswinkelbereich
(xxxviii) eine oder mehrere Kameras und einen um eine vertikale Drehachse drehbaren Halter zum Halten eines Objekts im horizontalen Betrachtungswinkelbereich.

Die jeweiligen Halter haben die Aufgabe, das Objekt an dem Ort zu halten, an dem es das Bildaufnahmesystem zur Aufnahme von Bildern erfassen kann. Im einfachsten Fall kann der Halter als ebene Fläche ausgebildet sein, auf der das Objekt abgelegt wird. Der Halter ist ggf. derart (bspw. Mit Hilfe eines Antriebsmotors) beweglich ausgebildet, dass vorzugsweise seine gesamte Oberfläche von dem Bildaufnahmesystem gescannt werden kann. Letztgenannte Aufgabe kann teilweise oder vollumfänglich von einem oder mehreren Spiegeln übemommen werden, die die nicht unmittelbar von Kameras des Bildaufnahmesystems erfassbaren Oberflächenbereiche des Objekts auf eine oder mehrere Kameras des Bildaufnahmesystems abbilden. Weiter alternativ oder zusätzlich zur Beweglichkeit und/oder Reflektivität des oder der Spiegel kann das Zusatzmodul auch selbst eine oder mehrere Kameras aufweisen, die Bilder des Objekts der von den Kameras des Grundgeräts nicht erfassbaren Oberflächenbereiche aufnehmen können, so dass final Bilder von der gesamten Oberfläche des Objekts vorliegen, die zur Rekonstruktion eines dreidimensionalen Modells des gescannten Objekts notwendig sind.

Die vorstehend beschriebenen Komponenten sind -entweder für sich oder zusammen mit einer oder mehreren der anderen- eingerichtet, den horizontalen und/oder vertikalen Betrachtungswinkelbereich von dem horizontalen und/oder vertikalen Betrachtungswinkelbereich ohne das Zusatzmodul auf den horizontalen Betrachtungswinkelbereich von 360° und oder/den vertikalen Betrachtungswinkelbereich um mindestens 10° mit dem Zusatzmodul zu erweitern.

Das Bildaufnahmesystem einer der vorstehend beschriebenen Varianten kann in einer weiteren erfindungsgemäßen Ausgestaltung, dadurch gekennzeichnet sein, dass das Zusatzmodul eine Beleuchtungseinrichtung aufweist, um ein im horizontalen Betrachtungswinkelbereich angeordnetes Objekt zu beleuchten. Es kann z.B. eine vertikale optionale Zusatzbeleuchtung und/oder eine horizontale optionale Zusatzbeleuchtung vorhanden sein. Damit ist es möglich, nicht nur den von dem Grundgerät des Bildaufnahmesystems ausgeleuchteten Objektbereich, sondern auch abgeschattete oder nicht hinreichend ausgeleuchtete Teile des Objekts auszuleuchten. Es ist möglich, dass die Beleuchtungseinrichtung so ausgestaltet ist, dass sie die gesamte Objektoberfläche beleuchten kann.

In der Regel weist nämlich das Bildaufnahmesystem ohne das Zusatzmodul bereits eine eigene Lichtquelle auf. Vorzugsweise ist diese Lichtquelle des Grundgeräts so konzipiert, dass sie den horizontalen Betrachtungswinkelbereich ohne das Zusatzmodul derart ausleuchtet, dass die durch die Lichtquelle erzeugte Lichtintensität an jeder Stelle auf einer Mantelfläche eines Kreiszylinders mit einem Durchmesser von 20 cm und mit in vertikaler Richtung ausgerichteter Mittelachse, welche durch den Schnittpunkt der äußeren linearen Begrenzungslinien des horizontalen Betrachtungswinkelbereichs ohne das Zusatzmodul verläuft, über eine vertikale Erstreckung von 20 cm um maximal 50 % von einem Mittelwert abweicht, welcher einen Mindestwert von 50 lx aufweist. Eine derartige Beleuchtung stellt sicher, dass das Gesicht eines Probanden hinreichend homogen ausgeleuchtet ist, um daraus photorealistische Bilder auf die vorstehend beschriebene Weise generieren zu können.

Grundsätzlich kann die Beleuchtungseinrichtung des Zusatzmoduls von einer Lichtquelle des Grundgeräts des Bildaufnahmesystems gespeist sein. Eine vorteilhafte Variante der Erfindung sieht jedoch vor, dass das Zusatzmodul eine eigene Zusatzlichtquelle aufweist. Damit ist es möglich, dass die Beleuchtung von der Dimensionierung der Lichtquelle des Grundgeräts unabhängig ist.

In einer bevorzugten Ausgestaltung dieser Variante sieht die Erfindung vor, dass die Zusatzlichtquelle den durch das Zusatzmodul erweiterten horizontalen Betrachtungswinkelbereich derart ausleuchtet, dass die durch die Zusatzlichtquelle erzeugte Lichtintensität an jeder Stelle auf einer Mantelfläche eines Kreiszylinders mit einem Durchmesser von 20 cm und mit in vertikaler Richtung ausgerichteter Mittelachse, welche durch den Schnittpunkt der äußeren linearen Begrenzungslinien des horizontalen Betrachtungswinkelbereichs ohne das Zusatzmodul verläuft, über eine vertikale Erstreckung von 20 cm um maximal 50 % von einem Mittelwert abweicht, welcher einen Mindestwert von 50 lx aufweist. Eine derartige Beleuchtung stellt sicher, dass nicht nur das Gesicht eines Probanden hinreichend homogen ausgeleuchtet ist, um daraus photorealistische Bilder auf die vorstehend beschriebene Weise generieren zu können, sondern auch das Accessoire, also das Objekt, von welchem mit Hilfe der Kombination aus Grundgerät und Zusatzmodul Bilder erfasst werden können.

Das Bildaufnahmesystem der erfindungsgemäßen Art kann in einer anderen Variante, dadurch gekennzeichnet sein, dass das Zusatzmodul wenigstens eine weitere Komponente aus der nachfolgend angegebenen Gruppe aufweist:
(i) eine mechanische Komponente zur Hintergrund-Segmentierung,
(ii) eine mechanische Komponente zur Verkippung eines von dem Bildaufnahmesystem aufgenommenen Objekts,
(iii) eine Strukturbeleuchtungseinrichtung,
(iv) einen Halter mit einem oder mehreren Markern zum Halten eines von dem Bildaufnahmesystem aufgenommenen Objekts,
(v) einen Halter mit einem oder mehreren Markern zum Halten und Verkippen eines von dem Bildaufnahmesystem aufgenommenen Objekts.

Unter einer mechanischen Komponente zur Hintergrund-Segmentierung versteht man eine das Objekt und die Aufnahmeeinheit umschließende Struktur welche einen zum Objekt verschiedenen Bildhintergrund in den Bildern der Bildaufnahmesysteme erzeugt, so dass mittels Bildverarbeitungsverfahren der bekannte Hintergrund vom Objekt getrennt werden kann.

Eine mechanische Komponente zur Verkippung eines von dem Bildaufnahmesystem aufgenommenen Objekts dient dazu, eine Drehung des Objekts relativ zum Aufnahmesystem zu ermöglichen, so dass eine Sequenz von Aufnahmen mit jeweils wechselndem Winkel erzeugt werden kann, so dass daraus zusammen mit weiteren Eingabedaten eine 3D-Rekonstruktion des Objekts berechnet werden kann.

Die Aufgabe einer Strukturbeleuchtungseinrichtung besteht darin, eine auf dem Objekt sichtbare Struktur zu generieren, so dass Merkmale dieser Struktur in verschiedenen gleichzeitig aufgenommenen Ansichten des Objekts einander zugeordnet werden können, so dass eine 3D-Rekonstruktion dieser Merkmale ermöglicht wird.

Marker an einem Halter für das Objekt haben den Zweck, dass die Position und Orientierung des Objekts an Hand einer oder mehrerer zeitgleich aufgenommener Bilder bestimmt werden kann, so dass daraus zusammen mit weiteren Eingabedaten eine 3D-Rekonstruktion des Objekts berechnet werden kann.

Das Zusatzmodul des erfindungsgemäßen Bildaufnahmesystems kann auch eine die wenigstens eine Komponente oder die wenigstens eine weitere Komponente aufnehmende Einhausung oder eine die wenigstens eine Komponente oder die wenigstens eine weitere Komponente aufnehmende geschlossene Einhausung aufweisen.

Eine Einhausung hat grundsätzlich den Zweck und den Vorteil, dass erstens das Objekt während der Aufnahmen vor eingestreutem Umgebungslicht geschützt werden kann, zweitens, dass eine Hintergrund-Segmentierung mit Hilfe der bekannten inneren Oberfläche der Einhausung ermöglicht wird, und drittens, dass das Objekt während der Aufnahmesequenz vor Berührung durch Personen geschützt ist. Ist die Einhausung sogar geschlossen, dann kann eine vollständige Unabhängigkeit von Veränderungen der Umgebungslichtsituation erreicht werden, so dass keine sollwareseitige Kompensation von Änderungen bzgl. des Umgebungslichts mehr notwendig ist.

Es hat sich als vorteilhaft herausgestellt, wenn die Einhausung oder die geschlossene Einhausung eine zylindersegmentförmige oder eine halbkreiszylindersegmentförmige Gestalt aufweist. Insbesondere günstig ist es, wenn die Gestalt der Einhausung einen formkomplementären Anschluss zu dem Grundgerät im Bereich deren Kamera- und Beleuchtungseinrichtung aufweist.

Eine weitere Ausgestaltung des erfindungsgemäßen Bilderfassungssystems umfasst eine Mehrzahl an Kameras zur Bildaufnahme als Bestandteil des Grundgeräts, welche kreisförmig angeordnet sind und welche den horizontalen Betrachtungswinkelbereich ohne das Zusatzmodul auf 180° ± 15° festlegen. Diese Ausgestaltung hat sich insbesondere für den Einsatz als Bestandteil eines Zentriersystems der in der europäischen Patentanmeldung Nr. 17153556.0 beschriebenen Art oder eines Anpasssystems des oben im Detail erläuterten Typs bewährt.

Die Erfindung wird nachfolgend anhand der Zeichnung näher beschrieben. Es zeigen:
- Figur 1 -: das Zentrier- und Messsystem ZEISS VISUFIT 1000 mit separat angeordnetem Zusatzmodul in Form einer Prinzipskizze von der Seite
- Figur 2 -: das Zentrier- und Messsystem ZEISS VISUFIT 1000 mit eingesetztem Zusatzmodul von der Seite
- Figur 3 -: das Zentrier- und Messsystem ZEISS VISUFIT 1000 mit eingesetztem Zusatzmodul nach der Figur 2 von oben in Draufsicht
- Figur 4 -: das Zentrier- und Messsystem ZEISS VISUFIT 1000 mit eingesetztem Zusatzmodul in Form eines geschlossenen Systems im Querschnitt längs S1-S2 nach der Figur 2
- Figur 5 -: das Zentrier- und Messsystem ZEISS VISUFIT 1000 mit eingesetztem Zusatzmodul nach den Figuren 1 bis 4 in perspektivischer Darstellung
- Figur 6 -: eine Graphik zur Veranschaulichung der Definition des horizontalen Betrachtungswinkelbereichs
- Figur 7 -: eine Graphik zur Veranschaulichung der Definition des vertikalen Betrachtungswinkelbereichs
- Figur 8 -: ein erstes Prinzip der Bildaufnahme mit dem Zentrier- und Messsystem ZEISS VISUFIT 1000 mit eingesetztem Zusatzmodul nach den Figuren 1 bis 5, welches auf der Verwendung eines Drehtellers beruht
- Figur 9 -: eine Veranschaulichung der Vergrößerung des vertikalen Betrachtungswinkelbereichs durch Änderung der Relativposition eines Objekts zu den Kameras des Zentrier- und Messsystems ZEISS VISUFIT 1000
- Figur 10 -: ein zweites Prinzip der Bildaufnahme mit dem Zentrier- und Messsystem ZEISS VISUFIT 1000 mit eingesetztem Zusatzmodul nach den Figuren 1 bis 5, welches auf der Verwendung von Spiegeln beruht
- Figur 11 -: ein Ausführungsbeispiel eines Objektscanvorgangs mit dem Zentrier- und Messsystem ZEISS VISUFIT 1000 nach den Figuren 1 bis 5.

Beim Objekt-Scanning führen Objekte wie z.B. Brillenfassungen zu hohen Anforderungen an die Scan-Hardware. Kostengünstige kompakte Scansysteme der in der Beschreibungseinleitung beschriebenen Art sind bislang nicht in der Lage, die hohen Anforderungen an Genauigkeit und Realismus in der Darstellung der virtuellen Objekte zu erfüllen, da aus Kostengründen jeweils nur eine einzige Kamera verbaut ist. Zudem sind diese System nicht in der Lage, Personen zu scannen - für das maßstabsgetreue Scannen von Personen ist die zeitgleiche Bildaufnahme mit mehreren Kameras notwendig. Bekannte Systeme für das Scannen von Objekten, die mit mehreren Kameras ausgestattet sind, wie z.B. die in den in der Beschreibungseinleitung genannten Dokumenten US 9,357,204 B2 und US 2003/0231175 A1) beschriebenen, sind nicht in der Lage, auch Personen zu scannen. D.h., für das Scannen von Personen ist ein zusätzlicher Scanner notwendig. Dies führt insgesamt zu hohen Gesamtkosten und hohem Gesamt-Platzbedarf für solch ein kombiniertes System.

Beispielsweise müsste sich ein Optiker, der sowohl Personen für die virtuelle Brillenanprobe scannen möchte, als auch Brillenfassungen scannen möchte, insgesamt zwei unterschiedliche Geräte anschaffen. Für beide dieser Geräte ist ein leistungsfähiger Rechner notwendig, eine Netzwerkanbindung, eine Beleuchtungseinheit, ein Kameraträger mit darauf angebrachten hochauflösenden Kameras und eine entsprechende Steuerelektronik. Diese doppelt vorhandenen Komponenten können bei dem erfindungsgemäßen Ansatz eingespart werden.

Ein weiterer Nachteil der Systeme der in der Beschreibungseinleitung angegebenen Art ist die fehlende Vernetzung der Systeme untereinander. Ein Optiker, der virtuelle Brillenfassungen für die virtuelle Brillenanprobe anbieten möchte, kann zwar auf käuflich erwerbbare Datenbanken zugreifen und gleichzeitig mit einem Scansystem nach dem Stand der Technik auch seine eigenen Fassungen scannen - jedoch kann er nicht auf gescannte Fassungen andere Optiker zugreifen, da diese nur lokal im jeweiligen Geschäft vorliegen. Dies wird bei dem erfindungsgemäßen Ansatz durch die Vernetzung der Systeme und der Anbindung an eine zentrale Datenbank gelöst.

Beispielhaft soll nachfolgend durch Bezugnahme auf ein konkretes kommerziell erhältliches Zentrier- und Messsystem, nämlich das ZEISS VISUFIT 1000 die durch die erfindungsgemäße Ausgestaltung erzielten Vorteile erläutert werden. Bei diesem Gerät ist die Funktionalität zum 3D-Scanning des Kopfes mit der Zentrierfunktionalität kombiniert. Hier ist die Möglichkeit der Erweiterung zu einem Objekt-Scanning-System besonders vorteilhaft. Man kann alle neun Kameras, die im Halbkreis um das Objekt angeordnet sind, nutzen und man kann die Beleuchtungsmodule, die ebenfalls im Halbkreis um das Objekt angeordnet sind, nutzen.

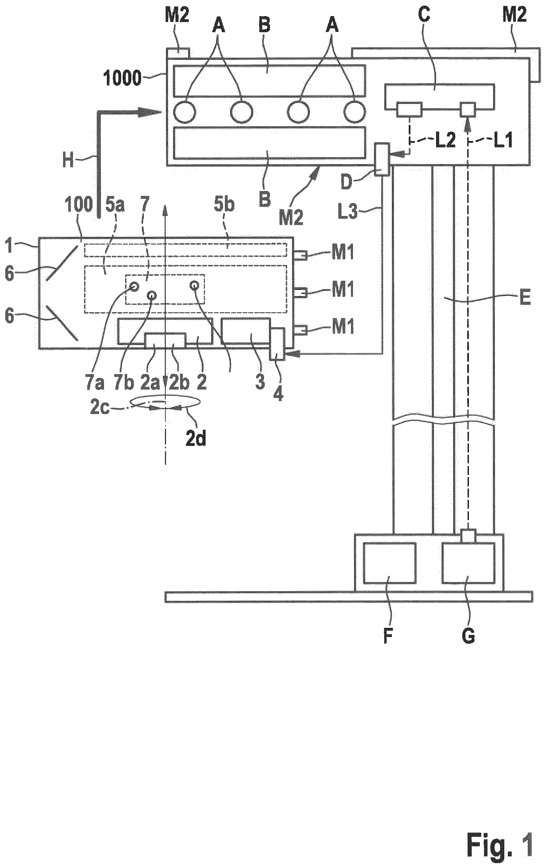

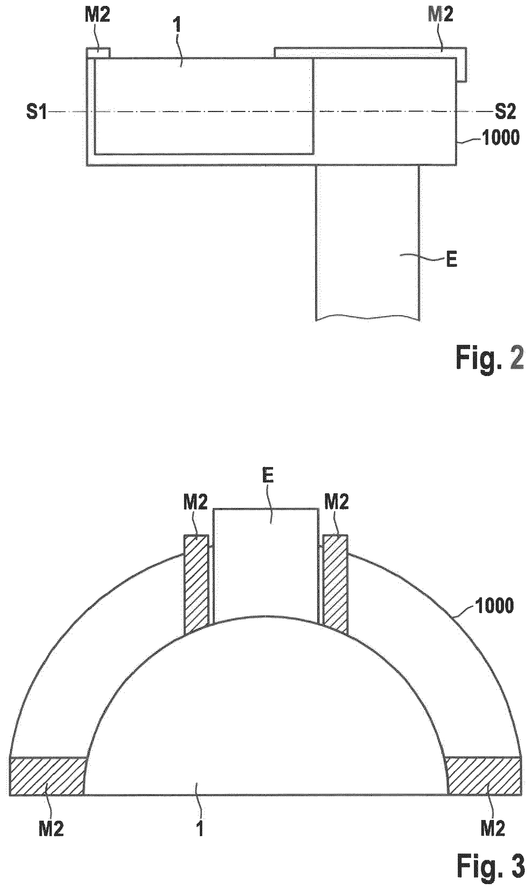

Im Folgenden werden wesentliche Komponenten des erfindungsgemäß vorgesehenen Zusatzmoduls und des ZEISS VISUFIT 1000 zunächst unter Bezugnahme auf die Figuren 1 bis 4 beschrieben. Alternativ kann anstatt eines Zentriersystems auch ein Gesichts- oder Kopfscanner als Basis verwendet werden. Wie in der US 6,692,127 B2 und auch in der US 2005/0162419 A1 beschrieben ist, werden Kopfscanner zur virtuellen Brillenanprobe und zur Anpassung von individualisierten Brillenfassungen eingesetzt - auch diese Systeme können als Basis verwendet werden - wichtig ist nur, dass die nachfolgend genannten Komponenten im Trägersystem vorhanden sind (Kameras, Trägerstrukur, Steuereinheit, Rechner, Netzteil). Im Folgenden wird zur Vereinfachung jedoch von einem Zentriersystem, insbesondere dem ZEISS VISUFIT 1000, ausgegangen.

Das ZEISS VISUFIT 1000 (Bezugszeichen 1000) umfasst eine tragende Struktur E und einen embedded Personal Computer F. Das Grundgerät 1000 umfasst ein Netzteil G. Das Grundgerät 1000 umfasst ferner neun Kameras A, die im Halbkreis angeordnet sind und einen Betrachtungswinkelbereich von 180° abdecken. Es hat eine Beleuchtungseinrichtung B, welche eine homogene Beleuchtung für die Aufnahme von Bildern durch die Kameras A bereitstellt. Bestandteil des Grundgeräts 1000 ist eine Steuerplatine C zur Steuerung der Funktionalitäten des Grundgeräts 1000, insbesondere zur Ansteuerung der Kameras A und der Beleuchtungseinrichtung B. Diese mit dem Netzteil G über eine elektrische Leitung L1 verbundene Steuerplatine C umfasst erfindungsgemäß Steuer-, Sensor- und Versorgungskomponenten für das Zusatzmodul 100. Ferner ist eine kabelgebundene (Leitung L2) Signal-/elektr. Schnittstelle D für das Zusatzmodul 100 vorhanden, deren Konnektivität mit Hilfe des Pfeils L3 kenntlich gemacht ist. Schließlich existiert eine mechanische Schnittstelle M2 (in der Skizze veranschaulicht durch eine Art Verzahnung M1 des Zusatzmoduls 100), mit deren Hilfe das Zusatzmodul 100 an der tragenden Struktur E des Grundgeräts 1000 fixiert werden kann. Die Koppelbarkeit durch die mechanischen Schnittstellen M1 und M2 ist in der Figur 1 durch den Pfeil mit dem Bezugszeichen H kenntlich gemacht.

Das Zusatzmodul 100 umfasst eine Einhausung 1 inkl. mechanischer Schnittstelle M1, einen oder mehrere Antriebsmotoren 2a, 2b für eine Linear/Rotations-Plattform 2 (deren Linearverschieblichkeit ist durch den Doppelpfeil 2c und deren Rotierbarkeit ist durch den Doppelpfeil 2d skizziert), optional eine Steuer-Elektronik 3, eine kabelgebundene zur Schnittstelle D komplementäre Signal-/elektr. Schnittstelle 4, eine vertikale, lediglich optional vorhandene Zusatzbeleuchtungseinrichtung 5a und eine ebenfalls optionale horizontale Zusatzbeleuchtungseinrichtung 5b. Ferner besitzt das Zusatzmodul 100 optional einen oder mehrere Spiegel 6 sowie einen Objekthalter 7 mit Markern 7a, 7b, 7c.

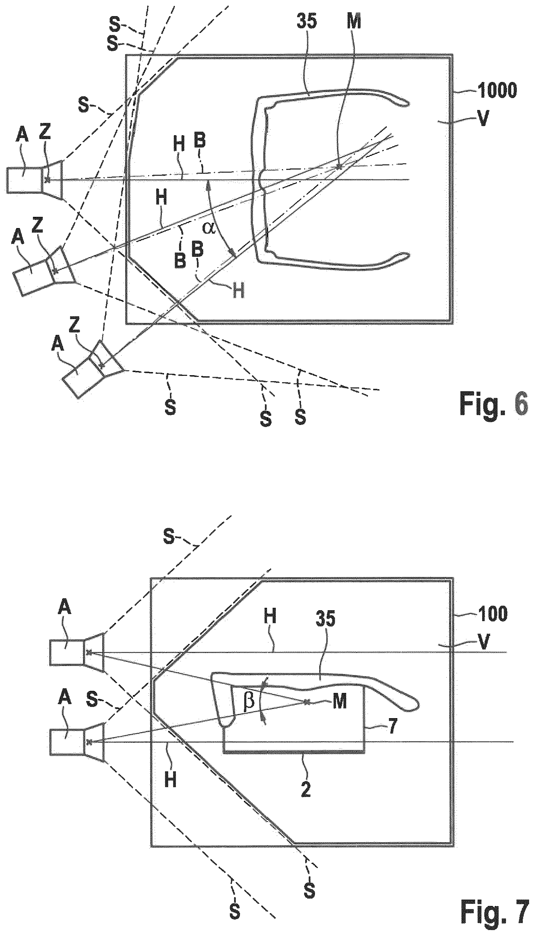

Die Figur 6 zeigt den horizontalen Betrachtungswinkelbereich α und Figur 7 zeigt den vertikalen Betrachtungswinkelbereich β bei der Verwendung mehrerer Kameras A zur Aufnahme eines Objekts 35 in Form einer Brillenfassung, welches sich im Scanvolumen V befindet, das seinerseits vom Zusatzmodul 100 eingeschlossen wird. Der Betrachtungsmittelpunkt M ist hier der Punkt kürzesten Abstands zu den Hauptblickachsen H der Kameras A. Diese nehmen das Objekt 35 innerhalb des Scanvolumens V auf, so dass der Inhalt des Scanvolumens inklusive des Objekts 35 in den Bildern (der jeweilige Bildaufnahmebereich einer Kamera A ist repräsentiert durch die Begrenzung durch gestrichelten Linien S) mehrerer der Kameras A zu erkennen ist.

In dem Beispiel nach der Figur 6 in der Draufsicht schließen die drei dargestellten Kameras A bezogen auf den Betrachtungsmittelpunkt M einen horizontalen Betrachtungswinkelbereich α ein. Eine Hinzunahme weiterer neben den Kameras A angeordneter Kameras würde den Betrachtungswinkelbereich α erweitern. Auch eine Drehung des Scanvolumens V relativ zu den Kameras A würde den Betrachtungswinkelbereich α erweitern. Der horizontale Betrachtungswinkelbereich α der Kameras A ist der durch die vom jeweiligen optischen Zentrum O der zugehörigen Kamera A ausgehenden Blickachsen H der Kameras A zum Betrachtungsmittelpunkt M hin begrenzte Winkelbereich in einer Horizontalebene, in dem die Kameras A zum Betrachtungsmittelpunkt M und zur Orientierung des Scanvolumens V hin eine lückenlose Kette bildende Bilder der im Scanvolumen V befindlichen Objekte 35 aufnehmen können.

In dem in Figur 7 dargestellten Beispiel erzeugen die zwei vertikal angeordneten Kameras A einen vertikalen Betrachtungswinkelbereich β, der bezogen auf den Betrachtungsmittelpunkt M durch den Winkel zwischen den beiden Blickachsen H für diesen Punkt in den jeweiligen Kameras A definiert ist. Auch hier gilt, dass die Hinzunahme weiterer Kameras A den vertikalen Betrachtungswinkelbereich entsprechend erweitern würde. Auch eine Rotation des Objekts 35 um eine Achse, die in dieser Ansicht senkrecht auf der dargestellten Zeichnung stehen würde, würde zu einer entsprechenden Erweiterung des vertikalen Betrachtungswinkelbcreichs β führen. Der vertikale Betrachtungswinkelbereich β der Kameras A ist analog zu obiger Definition des horizontalen Betrachtungswinkelbereichs α der durch die vom jeweiligen optischen Zentrum O der zugehörigen Kamera A ausgehenden Blickachsen H der Kameras A zum Betrachtungsmittelpunkt M hin begrenzte Winkelbereich in einer Vertikalebene, in dem die Kameras A zum Betrachtungsmittelpunkt M und zur Orientierung des Scanvolumens V hin eine lückenlose Kette bildende Bilder der im Scanvolumen V befindlichen Objekte 35 aufnehmen können.

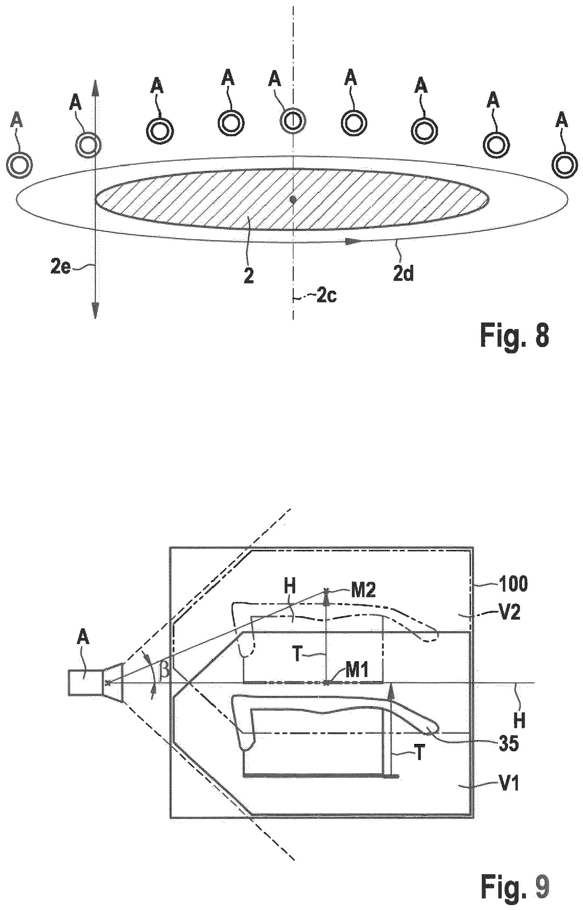

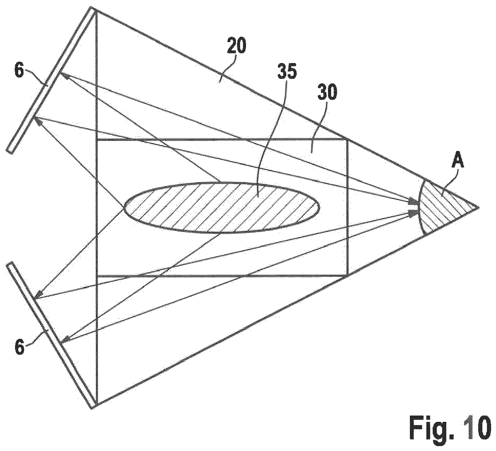

Die Figuren 8 und 10 zeigen zwei prinzipiell unterschiedliche Ausführungsvarianten für das Zusatzmodul 100, die wie in den Figuren 1 bis 5 gezeigt auch in Kombination vorhanden sein können.

Die in der Figur 8 gezeigte Variante basiert auf einer Mehrzahl an Kameras A (im Ausführungsbeispiel sind es 9 Kameras), die aus unterschiedlichen Richtungen auf das auf der Plattform 2 angeordnete Objekt ausgerichtet sind. Die in der Figur 10 gezeigte Variante basiert auf einer einzigen Kamera A und einer Mehrzahl an Spiegeln 6 (im Ausführungsbeispiel sind es zwei Spiegel), die im Sichtfeld 20 der Kamera A angeordnet sind, und die einen Scan-Bereich 30 abdecken, in dem sich das zu scannende Objekt 35 befindet. Die Spiegel sind entweder an der Plattform angebracht und bewegen sich mit dem Objekt/Objekthalter mit, oder, alternativ und besonders vorteilhaft ist die Anbringung der Spiegel an der Einhausung oder einer Trägerstruktur, die in festem räumlichen Bezug zu den Kameras steht. In diesem Fall ist die Kalibrierung der durch die Spiegel entstehenden neuen virtuellen Kamerapositionen vereinfacht. Durch die Spiegel 6 entstehen aus der Kamera A jeweils neue virtuelle Kameras mit folgenden Eigenschaften: a) das Bild der jeweiligen virtuellen Kamera ist im Bild der Kamera A in den Bereichen zu sehen, in denen die Szene im jeweiligen Spiegel zu sehen ist. B) die Position und Ausrichtung der jeweiligen virtuellen Kamera kann durch Kalibration auf Basis dieser Bildbereiche bestimmt werden. Die virtuellen Kameras können in ähnlicher Weise wie reale Kameras für die 3D-Rekonstruktion eingesetzt werden.

Ausgehend von der in der Figur 8 gezeigten Anordnung zeigt die Figur 9 die Erweiterung des vertikalen Betrachtungswinkelbereichs β bei Verschiebung des Scanvolumens V1 in vertikaler Richtung entlang eines Verschiebungsvektors T von einer ersten Position und Orientierung V1 in eine zweite Position und Orientierung V2. Dabei verschiebt sich auch der Betrachtungsmittelpunkt M1 um den Vektor T hin zu einem verschobenen Betrachtungsmittelpunkt M2 des verschobenen Scanvolumens V2. Durch die Verschiebung wird der Betrachtungswinkelbereich β um den gezeigten Winkel β erhöht.

Bei Zentriersystemen ist die Aufgabe deren Steuereinheit ganz allgemein die Auslösung ("Triggerung") der Kameras und die zeitliche Synchronisation dieser Auslösung mit der Steuerung der Beleuchtung. Aufgabe der im Ausführungsbeispiel im Wesentlichen funktional in der Steuerplatine C realisierten erweiterten Steuereinheit ist nach dieser Erfindung die zusätzliche Ansteuerung von motorischen Antrieben 2a, 2b sowie weiterer Komponenten 5a, 5b, ggf. 6 im Zusatzmodul 100. Wird das Zusatzmodul 100 angebracht und die Objekt-Scanning-Funktionalität in der Software aufgerufen, dann werden nach jeder Kameraaufnahme ggf. motorische Antriebe 2a, 2b bewegt bzw. weitere Daten an der Schnittstelle 4, D zwischen Zusatzmodul 100 und Controllerplatine C ausgetauscht.

Daher wird die Steuereinheit C im vorliegenden Ausführungsbeispiel nach der Figur 1 um folgende Merkmale erweitert:
1. Spannungsversorgung: Die Steuerplatine C generiert eine Versorgungsspannung (sowie Masse), die zur Versorgung des Zusatzmoduls 100 nach außen geführt ist (Schnittstellen D, 4). Die Spannungsversorgung ist zu Gewährleistung der Gerätesicherheit abschaltbar.
2. Steuer-Chip Schrittmotor: Ein dezidierter General Purpose Motor-Steuer-Chip zur präzisen schrittweisen Ansteuerung von Schrittmotoren 2a, 2b des Zusatzmoduls 100
3. GPIO Ports zum Zusatzmodul 100: General Purpose I/O Ports (repräsentiert durch die Schnittstellen 4, D) zum Zusatzmodul 100 ermöglichen, im Zusatzmoduls 100 weitere Funktionalitäten anzusteuern, wie
   a. Umschaltung zwischen Ansteuerung von Schrittmotoren 2a, 2b, die Rotation 2d oder Translation 2c umsetzen
   b. Optional: vertikal und/oder horizontale Zusatzbeleuchtung 5a, 5b
   c. Optional: Mechanische Komponenten (z.B. Marker 7a, 7b, 7c) zur besseren Hintergrund-Segmentierung
   d. Optional: Mechanische Komponenten (z.B. als Bestandteil der motorischen Antriebe 5a) zur Verkippung des Scan-Objekts
   e. Optional: Strukturbeleuchtung (z.B. in 5a und 5b implementiert)
4. GPIO Ports (repräsentiert durch die Schnittstellen 4, D) vom Zusatzmodul 100: Erlauben es, Sensor-Daten wie z.B. Position des Schritt-Motors oder der Schritt-Motoren 2a an ZEISS VISUFIT 1000 zurückzugeben.

Die Aufgabe der mechanischen Schnittstelle H ist die Herstellung eines festen örtlichen Bezugs zwischen dem Zusatzmodul 100 und dem Grundgerät/Zentriersystem 1000. Dabei muss das Zusatzmodul 100 in einfacher Weise angebracht und wieder entfernt werden können. Der feste örtliche Bezug muss insbesondere zum tragenden Element E, auf dem die Kameras A angeordnet sind, hergestellt werden. Dies wird folgendermaßen erreicht.

Die Verbindung des Zusatzmoduls 100 mit dem ZEISS VISUFIT 1000 erfolgt in einer Art, die möglichst platzsparend ist und in das bestehende Gerätevolumen des ZEISS VISUFIT 1000 integriert wird. Es ist denkbar, dass das Zusatzmodul 100 in Teilen aus dem durch die Kameras A und die Beleuchtungseinrichtung B gebildeten inneren Halbkreis des ZEISS VISUFIT 1000 horizontal und/oder vertikal nach außen herausragt (siehe Skizze zu M1).

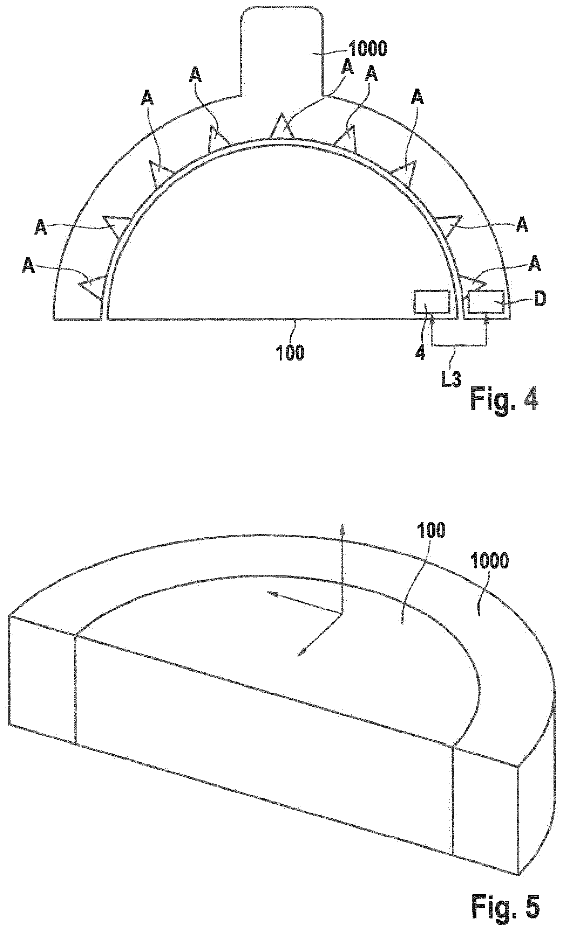

Aufgabe der Signal-Schnittstelle D ist das Senden von Steuersignalen an die Steuerung der motorischen Antriebe 2a, 2b. Sie kann in folgenden Formen realisiert werden:
a. Vorzugsweise über die elektrische Schnittstelle D, 4 (wie in der Figur 1 skizziert)
b. Drahtlos über eine Funkverbindung, z.B. über eine WLAN oder Bluetooth Verbindung L3 (wie in der Figur 4 skizziert)
c. Optisch mittels Lichtsignal und Photodetektor (Figur 4 skizziert auch diesen Fall).

### Zu verarbeitende Signale

1. Initialisierung / Zurücksetzen von Aktuatoren (z.B. 2a, 2b, 5a, 5b, 6) des Zusatzmoduls 100; Motoren (insbesondere 2a, 2b): Einnahme der Startposition
2. Nächste Position anfahren ; Alternativ: direktes Anfahren einer Position, die z.B. als Bitmuster codiert ist - in diesem Fall wird das Bitmuster übertragen

### Optional / wenn vorhanden:

3. Nächstes Beleuchtungsmuster einstellen (falls eine ansteuerbare Beleuchtungseinrichtung wie z.B. 5a, 5b im Zusatzmodul 100 vorhanden)
4. Optionale Zusatzbeleuchtungseinrichtungen einschalten, die für spezifische Brillenmaterialien benötigt werden können, um zu einer dafür optimierten Aufnahmesituation zu führen und Reflexionen zu minimieren.

Aufgabe der elektrischen Schnittstelle (hier mit dem Bezugszeichen D gekennzeichnet) ist es
a. Als Signalschnittstelle die im Zusatzmodul 100 befindlichen motorischen Antriebe 2a, 2b bzgl. der Ansteuerung mit der im Zentriergerät 1000 vorhandenen Steuereinheit C zu verbinden.
b. das Zusatzmodul 100 mit elektrischem Strom zu versorgen. Dazu wird eine Versorgungsspannung (mindestens 10 W Leistung, vorzugsweise mindestens 60 W) an einem elektrischen Stecker (repräsentiert durch D, 4) zur Verfügung gestellt;

Dies wird durch folgende Merkmale erreicht:
Steckkontakt für
- Masse
- Versorgungsspannung
- Signalleitungen 1..n
   ∘ Signalleitungen zur Ansteuerung der Motoren 2a, 2b des Zusatzmoduls 100
   ∘ Signalleitungen zur Ansteuerung der Beleuchtungseinheiten 5a, 5b des Zusatzmoduls (falls Beleuchtung inkl. Beleuchtungssteuerung in das Zusatzmodul 100 integriert ist)
   ∘ Signalleitung für Initialisierung / Zurücksetzen des Zusatzmoduls 100

Als Alternative zu einer elektrischen Schnittstelle D kann das Zusatzmodul 100 auch per Batterie oder Akku mit Strom versorgt werden. Die Signalschnittstelle D wird in diesem Fall drahtlos (siehe z.B. Figur 4) realisiert.

Bei herkömmlichen 3D-Scannern wird die Software auf einem Rechner ausgeführt, der entweder im Scanner integriert ist oder separat angeschlossen wird. Erfindungsgemäß jedoch wird das Softwaremodul zum Objekt-Scanning auf dem Rechner F ausgeführt, der auch bereits zur Ansteuerung des Zentriergeräts 1000 verwendet wird.

Im Zusatzmodul 100 kommen nach den Figuren 1 bis 5 neue Merkmale/Funktionalitäten zum Einsatz, die den modularen und lokalen Einsatz in Augenoptiker-Geschäften ermöglichen. Dies sind insbesondere:
1. Einhausung 1 inkl. mechanische Schnittstelle M1: Die Einhausung 1 ist so gestaltet, dass
   a. Kein externes Streulicht aus der lokalen Umgebung außer die spezifisch vorgesehenen Lichtquellen A des Zentriersystems 1000 und ggf. des Zusatzmoduls 100 selbst auf das zu scannende Objekt treffen.
   b. Der Hintergrund, vor dem das zu scannende Objekt aufgenommen wird, bekannt, definiert und optimiert zur Segmentierung des zu scannenden Objekts ist. Insbesondere wird eine homogene (innere) Hintergrundfläche, wie z.B. eine einfarbige, matt streuende Fläche oder eine von hinten beleuchtete Milchglasscheibe oder eine andere, semitransparente Struktur, z.B. ein Backlight, wie zu finden unter https://de.wikipedia.org/wiki/LED-Backlight, aufgerufen am 11.06.2018, verwendet.
   c. Diese gleichzeitig die mechanische Schnittstelle M1 zum Zentriersystem 1000 bzw. Struktur für die Halterung am Zentriersystem (hier VISUFIT 1000) herstellt.
2. Antriebsmotor 2a, 2b für Linear/Rotations-Plattform 2: Ist so gestaltet, dass Objekte sowohl linear (Doppelpfeil 2c) als auch bei Bedarf rotierend (Doppelpfeil 2d) an den bestehenden horizontal angebrachten VISUFIT 1000 Kameras A vorbeigeführt werden können. Eine davon abweichende Verschiebungslogik an anderweitig angebrachten Kameras bei anderen Zentriersystemen ist ebenfalls möglich.
3. Optionale Steuer-Elektronik 3: Kann eingesetzt werden, um ein Multiplexing von Schrittmotor-Steuersignalen vom Zentriersystem 1000 kommend zu ermöglichen und über das gleiche Kabel L3 sowohl einen Schrittmotor 2b für Linearverschiebung 2c als auch einen Schrittmotor 2a für Rotation 2d anzusteuern.
4. Kabelgebundene Signal-/elektr. Schnittstelle 4: Eine Stecker-Verbindung mit dezidierten Leitungen für Versorgungs-Spannung und Signalleitungen realisiert die kabelgebundenen Schnittstelle für Energie- und Datenaustausch. Signal-Austausch ist auch drahtlos denkbar.
5. Zusatzbeleuchtungseinrichtung 5a und 5b: Kommt optional zum Einsatz, um bei Bedarf dezidierte Beleuchtungs-Setups zu schaffen, die zu verminderter Reflexion des zu scannenden Objekts aus Kamera-Sicht führen oder aber bei Bedarf die Ausleuchtung des Scan-Raums noch homogener gestalten
6. Spiegel 6: Die Spiegel 6 haben zwei Funktionen: Sie erlauben es, Facetten des zu scannenden Objekts 35 direkt für die Kamera A sichtbar zu machen, die sonst auf der von der Kamera A abgewandte Seite wären. Somit ist mit den Spiegeln 6 ein Objekt 35 auch aus 360 Grad zu scannen, selbst, wenn die Kameras A von VISUFIT 1000 nur einen Halbkreis von 180 Grad abdecken. Ferner vergrößern die Spiegel 6 die für die Kameras A pro Aufnahme sichtbaren Objektfacetten, insbesondere, wenn es sich um Objekte 35 mit geringer Höhe handelt wie z.B. Brillenfassungen (vgl. Fig. 7), nutzen somit den Kamera-Sichtkegel optimal aus und generieren mehr Eingangsdaten für die 3D-Rekonstruktion. Die Spiegel 6 sind in zwei Varianten möglich:
   a. Fixiert an der Einhausung und somit stabil gegenüber den aufnehmenden Kameras A, so dass das zu scannende Objekt 35 an Kameras A und Spiegel 6 vorbeigeführt wird
   b. Fixiert am Objekthalter 7 und somit stabil gegenüber dem aufzunehmenden Objekt 35, so dass das zu scannende Objekt 35 inkl. Spiegeln 6 an den Kameras A vorbeigeführt wird.
7. Objekthalter 7 mit Markern 7a, 7b, 7c: Am Objekthalter 7 sind Marker 7a, 7b, 7c angebracht, die es erlauben, die Verschiebung des Objekts 35 vor den Kameras A von VISUFIT 1000 zu nachzuverfolgen und daraus die jeweilige neue Position zurück zu rechnen bzw. zu verifizieren. Diese Information ist nötig, um eine genaue 3D Rekonstruktion sicherzustellen, da eine sub-Millimeter-genaue Kalibrierung von Scan-Modul zu Zentriersystem nicht durchgängig sichergestellt werden kann.

Es sind zwei Varianten möglich:
a. Mindestens ein oder mehrere Marker 7a, 7b, 7c, sichtbar von mindestens zwei Kameras A: Bestimmen der Trajektorie des Objekts 35
b. Mindestens drei oder mehrere Marker 7a, 7b, 7c: Bestimmen des genauen Verlaufs der Objekt-Verschiebung in den Raumrichtungen der X, Y und Z-Achse.

Somit zeichnet sich das Zusatzmodul 100 insbesondere durch das Nichtvorhandensein der folgenden Komponenten aus:
- keine eigene(n) Kamera(s)
- kein eigenes Netzteil
- kein Rechner
- keine Datenübertragung (Netzwerkanschluss) zum Weiterverarbeiten der gescannten Daten.

Folgende weitere Komponenten können Teil des Grundgeräts 1000 sein: Das Zentriersystem 1000 benötigt mindestens eine Kamera und ein Netzteil zum Erzeugen der Versorgungsspannung der Kamera A und einen stabilen Träger E, auf dem die Kameras A angeordnet sind. Weitere typische Merkmale von Zentriersystemen sind hier irrelevant.

Folgende weitere Komponenten können Teil des Zusatzmoduls 100 sein:
a. ein motorischer Antrieb 2a, 2b, der eine Bewegung des Objekts 35 bewirkt
b. der motorische Antrieb 2a, 2b kann als Drehtisch ausgeführt sein. Bei horizontal angeordneten Kameras A sollte die Drehachse gegenüber der vertikalen Achse gekippt sein oder horizontal verlaufen -- in diesem Fall wird für die zu scannenden Objekte eine Halterung benötigt. Bei vertikal angeordneten Kameras ist die Drehung um die vertikale Achse vorteilhaft - hier ist eine Halterung nicht zwingend erforderlich.
c. der motorische Antrieb 2a, 2b kann als Hubtisch ausgeführt sein
d. der motorische Antrieb 2a, 2b kann als Linearantrieb mit vertikaler Bewegungsrichtung ausgeführt sein. Bei dieser Ausführungsform ist die Halterung des Objekts nicht
e. der motorische Antrieb 2a, 2b kann mit Schrittmotoren zum reproduzierbaren Anfahren von definierten Positionen ausgeführt sein.

Folgende weitere Komponenten können im Zusatzmodul 100 eingesetzt sein.
1. Musterprojektor zur Projektion statischer oder dynamisch wechselnder Muster: diese Muster können in der Algorithmik zur 3D-Rekonstruktion vorteilhaft eingesetzt werden. Beispielsweise kann ein DLP Projektor eingesetzt werden. Beispiels weise kann eine RGB LED Lichtquelle verwendet werden. Beispielsweise kann eine Menge zu projizierender Muster in einem Speicherbaustein gespeichert sein, so dass eine Sequenz von Mustern nacheinander projiziert werden, wobei nach jeder Musterprojektion die verfügbaren Kameras ausgelöst und die aufgenommenen Bilder gespeichert bzw. übertragen werden. Alternativ kann der Musterprojektor als Dia-Projektor ausgeführt sein, so dass ein statisches Muster mit Hilfe z.B. einer LED Projektorlampe auf das Objekt projiziert wird. Alternativ kann der Musterprojektor mit einer Laserlichtquelle und einer diffus streuenden Mattscheibe ausgestattet sein so dass ein Punktemuster auf das Objekt projiziert wird. Alternativ kann der Musterprojektor als Laserlinienprojektor ausgeführt sein, so dass ein Muster aus einer oder mehreren Linien auf das Objekt projiziert wird.
2. Bildschirm: zur Anzeige dynamisch wechselnder Hintergrundmuster kann ein Bildschirm hinter dem Objekt angebracht werden. Ein auf dem Bildschirm angezeigtes Muster dient zur verbesserten Hintergrund-Segmentierung und Berechnung von ortsaufgelösten Transparenzeigenschaften des Objekts. Dabei kann der Bildschirm von einem Rechnermodul angesteuert werden, beispielsweise einem Einplatinenrechner bzw, einem ,System on a Chip' (SoC). Der Bildschirm kann beispielsweise als TFT-LCD Schirm ausgeführt sein, beispielsweise mit einem LED-Backlight für die Lichterzeugung.
3. Tafel mit statischem Muster: alternativ zu einem dynamischen Muster kann auf einer Tafel ein statisches Muster aufgebracht werden. Beispielsweise kann in Kombination mit der Ausführung des motorischen Antriebs als Hubtisch oder Linearantrieb ein Streifenmuster vorteilhaft eingesetzt werden. Beispielsweise kann ein Muster aus hellen und dunklen Streifen oder ein Farbiges Streifenmuster einsetzt werden. Da das Objekt mittels des Hubtisches bzw. des Linearabtriebs vor dem Streifenmuster bewegt wird, werden alle Bereiche des Objekts vor unterschiedlichen Hintergründen aufgenommen, so dass für beliebige Farbkombination des zu segmentierenden Objekts im aufgenommenen Bild eine Abhebung vom Hintergrund möglich ist. Vorteilhaft ist auch die Verwendung eines Streifenmusters mit wechselnder Streifenbreite bzw. eines Multi-Wellenlängenmusters. Alternativ kann die Tafel als halbtransparente Mattscheibe und einer LED-Flächenlichtquelle zur Beleuchtung ausgeführt sein, so dass die Objektsilhouette jeweils vor der Mattscheibe aufgenommen wird. Dies ermöglicht eine besonders kontrastreiche Aufnahme der Objektsilhouette und führt damit zu einer höheren Genauigkeit der Rekonstruktion. Vorteilhaft ist die Ausführung der Flächenlichtquelle als gerichtete Beleuchtung. Dazu kann beispielsweise eine Folie mit richtungsabhängiger Transmission verwendet werden. Solche Folien sind unter dem Namen "Privacy Filter" bzw. "Blickschutzfilter" erhältlich. Die gerichtete Beleuchtung hat den Vorteil, dass durch Streulicht verursachte Reflexionen vermindert werden.

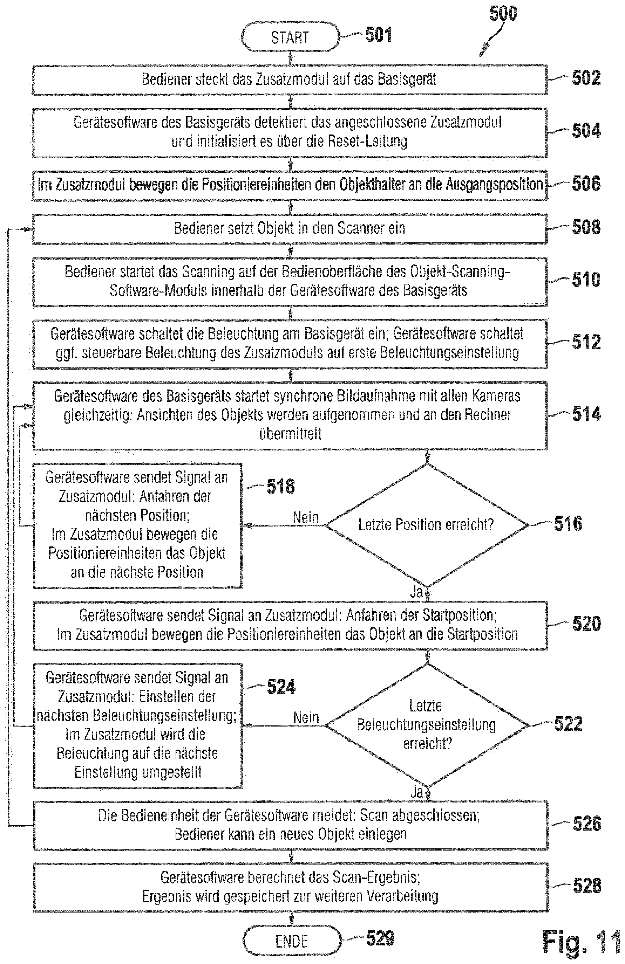

Das eigentliche Scanning Verfahren ist prinzipiell sehr ähnlich wie bei US 9,357,204 B2 beschrieben. Neu ist die Realisierung als Softwaremodul innerhalb der Gerätesoftware des Zentriersystems. Der Ablauf 500 einer Scan-Abfolge ist unter Bezugnahme auf die Figur 11 folgender:
Der Start 501 des Ablaufs beginnt mit einem ersten Schritt 502, in welchem ein Bediener das Objekt-Scanning-Modul / Zusatzmodul 100 auf das Grundgerät 1000 steckt. Die Gerätesoftware des Grundgeräts 1000 detektiert das angeschlossene Zusatzmodul 100 in einem zweiten Schritt 504 und initialisiert es über die Reset-Leitung.

In einem dritten Schritt 506 bewegen die Positioniereinheiten 2, 2a, 2b im Zusatzmodul 100 den Objekthalter 7 an die Ausgangsposition. Der Bediener setzt das Objekt 35 in einem vierten Schritt 508 in das Zusatzmodul 100 ein.

In einem weiteren fünften Schritt 510 startet der Bediener das Scanning auf der Bedienoberfläche des Objekt-Scanning-Software-Moduls innerhalb der Geräte-Software des Grundgeräts 1000. In einem weiteren sechsten Schritt 512 schaltet die Gerätesoftware die Beleuchtung B am Grundgerät 1000 ein. Weiterhin schaltet die im Computer F hinterlegte Gerätesoftware ggf. die steuerbare Beleuchtung 5a, 5b des Zusatzmoduls 100 auf eine erste Einstellung ein.

In einem Schritt 514 startet die Gerätesoftware des Grundgeräts 1000 die synchrone Bildaufnahme mit allen Kameras A, so dass gleichzeitig alle Ansichten des Objekts 35 aufgenommen und nachfolgend an den Rechner F übermittelt werden.

Eine Abfrage 516 prüft, ob das Objekt 35 mittels der Plattform 2 eine letzte Position erreicht hat. Ist dies nicht der Fall, sendet die Gerätesoftware in einem Schritt 518 ein Signal an das Zusatzmodul 100 zum Anfahren der nächsten Position. Im Zusatzmodul 100 bewegen die Positioniereinheiten 2a, 2b das Objekt 35 an die nächste Position. In dieser Position startet die Gerätesoftware des Grundgeräts 1000 die synchrone Bildaufnahme mit allen Kameras A wieder, so dass gleichzeitig alle Ansichten des Objekts 35 aufgenommen und nachfolgend an den Rechner F übermittelt werden (Schritt 514). Diese Schrittfolge wird so lange wiederholt, bis die Abfrage 516 feststellt, dass die letzte Position erreicht ist.

Danach sendet im Schritt 520 die Gerätesoftware ein Signal an das Zusatzmodul 100 zum Anfahren der Startposition.

Eine weitere Abfrage 522 prüft, ob die letzte Beleuchtungseinstellung erreicht ist. Ist dies nicht der Fall, sendet die Gerätesoftware in einem Schritt 524 ein Signal an das Zusatzmodul 100 zum Einstellen der nächsten Beleuchtungseinstellung. Im Zusatzmodul 100 wird die Beleuchtung 5a, 5b auf die nächste Einstellung umgestellt. In dieser Position und mit dieser Beleuchtung startet die Gerätesoftware des Grundgeräts 1000 die synchrone Bildaufnahme mit allen Kameras A wieder, so dass gleichzeitig alle Ansichten des Objekts 35 aufgenommen und nachfolgend an den Rechner F übermittelt werden (Schritt 514).

Danach folgt für diese Beleuchtungseinstellung wieder ein Anfahren unterschiedlicher Positionen (Schritte 516, 518, 514). Diese Sequenz wird ggf. für weitere Beleuchtungseinstellungen wiederholt (Schritte 522, 524 i.V.m. 516, 518, 514) bis die letzte Beleuchtungseinstellung in der Abfrage 522 festgestellt ist.

In einem Schritt 526 meldet die Bedieneinheit der Gerätesoftware: Scan abgeschlossen; Bediener kann ein neues Objekt 35 einlegen.

Im Zusatzmodul 100 bewegen die Positioniereinheiten 2, 2a, 2b den Objekthalter 7 an die Ausgangsposition (Schritt 528), das Objekt ist vollständig erfasst und der gesamte Vorgang ist abgeschlossen (Schritt 529) und bereit für einen Neustart (Schritt 501).

## Patentansprüche

1. Bildaufnahmesystem (1000), mit welchem in einem Fall (i) Bilder des Gesichts einer Person über einen horizontalen Betrachtungswinkelbereich (α) von nicht mehr als 240° aufgenommen werden können und/oder mit welchem in einem Fall (ii) Bilder des Gesichts der Person über einen vertikalen Betrachtungswinkelbereich (β=0°) von nicht mehr als 10° aufgenommen werden können, **gekennzeichnet durch** ein lösbar verbindbares Zusatzmodul (100), welches in dem Fall (i) den horizontalen Betrachtungswinkelbereich (a) auf 360° erweitert und/oder welches in dem Fall (ii) den vertikalen Betrachtungswinkelbereich (β) um mindestens 10° erweitert.

2. Bildaufnahmesystem (1000) nach Anspruch 1, **dadurch gekennzeichnet, dass** die lösbare Verbindung wenigstens eine Verbindung aus der Gruppe
(i) eine Verbindung (D) zur Übertragung von Daten zum Zusatzmodul (100)
(ii) eine Verbindung (D) zum Bereitstellen einer Energieversorgung für das Zusatzmodul (100)
(iii) eine mechanische Verbindung (Ml, M2)

3. Bildaufnahmesystem (1000) nach Anspruch 1 oder 2, **dadurch gekennzeichnet, dass** das Zusatzmodul (100) wenigstens eine Komponente aus der nachfolgend angegebenen Gruppe enthält:
(i) einen drehbaren Halter (2, 7) zum Halten eines Objekts (35) im horizontalen Betrachtungswinkelbereich
(ii) einen drehbaren Halter (2, 7) zum Halten eines Objekts (35) im horizontalen und vertikalen Betrachtungswinkelbereich
(iii) einen um eine vertikale Drehachse drehbaren Halter (2, 7) zum Halten eines Objekts (35) im horizontalen Betrachtungswinkelbereich
(iv) einen um eine horizontale Drehachse drehbaren Halter (2, 7) zum Halten eines Objekts (35) im horizontalen und vertikalen Betrachtungswinkelbereich
(v) einen um eine diagonal im Raum liegende Drehachse drehbaren Halter (2, 7) zum Halten eines Objekts (35) im horizontalen und vertikalen Betrachtungswinkelbereich
(vi) einen verschiebbaren Halter (2, 7) zum Halten eines Objekts (35) im horizontalen Betrachtungswinkelbereich
(vii) einen verschiebbaren Halter (2, 7) zum Halten eines Objekts (35) im horizontalen und vertikalen Betrachtungswinkelbereich
(viii) einen linear verschiebbaren Halter (2, 7) zum Halten eines Objekts (35) im horizontalen Betrachtungswinkelbereich
(ix) einen linear verschiebbaren Halter (2, 7) zum Halten eines Objekts (35) im horizontalen und vertikalen Betrachtungswinkelbereich
(x) einen drehbaren und verschiebbaren Halter (2, 7) zum Halten eines Objekts (35) im horizontalen Betrachtungswinkelbereich
(xi) einen drehbaren und verschiebbaren Halter (2, 7) zum Halten eines Objekts (35) im horizontalen und vertikalen Betrachtungswinkelbereich
(xii) einen drehbaren und linear verschiebbaren Halter (2, 7) zum Halten eines Objekts (35) im horizontalen Betrachtungswinkelbereich
(xiii) einen drehbaren und linear verschiebbaren Halter (2, 7) zum Halten eines Objekts (35) im horizontalen und vertikalen Betrachtungswinkelbereich
(xiv) einen in vertikaler Richtung verschiebbaren Halter (2, 7) zum Halten eines Objekts (35) im horizontalen Betrachtungswinkelbereich
(xv) einen in vertikaler Richtung verschiebbaren Halter (2, 7) zum Halten eines Objekts (35) im horizontalen und vertikalen Betrachtungswinkelbereich
(xvi) einen in vertikaler Richtung linear verschiebbaren Halter (2, 7) zum Halten eines Objekts (35) im horizontalen Betrachtungswinkelbereich
(xvii) einen in vertikaler Richtung linear verschiebbaren Halter (2, 7) zum Halten eines Objekts (35) im horizontalen und vertikalen Betrachtungswinkelbereich
(xviii) einen um eine vertikale Drehachse drehbaren und in vertikaler Richtung linear verschiebbaren Halter (2, 7) zum Halten eines Objekts (35) im horizontalen Betrachtungswinkelbereich
(xix) einen um eine vertikale Drehachse drehbaren und in vertikaler Richtung linear verschiebbaren Halter (2, 7) zum Halten eines Objekts (35) im horizontalen und vertikalen Betrachtungswinkelbereich
(xx) einen um eine vertikale Drehachse drehbaren und in vertikaler und in horizontaler Richtung linear verschiebbaren Halter (2, 7) zum Halten eines Objekts (35) im horizontalen und vertikalen Betrachtungswinkelbereich
(xxi) einen oder mehrere Spiegel (6) und einen Halter (2, 7) zum Halten eines Objekts (35) im horizontalen Betrachtungswinkelbereich
(xxii) einen oder mehrere Spiegel (6) und einen Halter (2, 7) zum Halten eines Objekts (35) im horizontalen und vertikalen Betrachtungswinkelbereich
(xxiii) einen oder mehrere Spiegel (6) und einen verschiebbaren Halter (2, 7) zum Halten eines Objekts (35) im horizontalen Betrachtungswinkelbereich
(xxiv) einen oder mehrere Spiegel (6) und einen verschiebbaren Halter (2, 7) zum Halten eines Objekts (35) im horizontalen und vertikalen Betrachtungswinkelbereich
(xxv) einen oder mehrere Spiegel (6) und einen in horizontaler Richtung verschiebbaren Halter (2, 7) zum Halten eines Objekts (35) im horizontalen Betrachtungswinkelbereich
(xxvi) einen oder mehrere Spiegel (6) und einen in vertikaler Richtung verschiebbaren Halter (2, 7) zum Halten eines Objekts (35) im horizontalen und vertikalen Betrachtungswinkelbereich
(xxvii) einen oder mehrere Spiegel (6) und einen in horizontaler Richtung linear verschiebbaren Halter (2, 7) zum Halten eines Objekts (35) im horizontalen Betrachtungswinkelbereich
(xxviii) einen oder mehrere Spiegel (6) und einen in vertikaler Richtung linear verschiebbaren Halter (2, 7) zum Halten eines Objekts (35) im horizontalen Betrachtungswinkelbereich
(xxix) einen oder mehrere Spiegel (6) und einen drehbaren Halter (2, 7) zum Halten eines Objekts (35) im horizontalen Betrachtungswinkelbereich
(xxx) einen oder mehrere Spiegel (6) und einen um eine vertikale Drehachse drehbaren Halter (2, 7) zum Halten eines Objekts (35) im horizontalen Betrachtungswinkelbereich
(xxxi) eine oder mehrere Kameras (A) und einen Halter (2, 7) zum Halten eines Objekts (35) im horizontalen Betrachtungswinkelbereich
(xxxii) eine oder mehrere Kameras (A) und einen verschiebbaren Halter (2, 7) zum Halten eines Objekts (35) im horizontalen Betrachtungswinkelbereich
(xxxiii) eine oder mehrere Kameras (A) und einen in horizontaler Richtung verschiebbaren Halter (2, 7) zum Halten eines Objekts (35) im horizontalen Betrachtungswinkelbereich
(xxxiv) eine oder mehrere Kameras (A) und einen in vertikaler Richtung verschiebbaren Halter (2, 7) zum Halten eines Objekts (35) im horizontalen Betrachtungswinkelbereich
(xxxv) eine oder mehrere Kameras (A) und einen in horizontaler Richtung linear verschiebbaren Halter (2, 7) zum Halten eines Objekts (35) im horizontalen Betrachtungswinkelbereich
(xxxvi)eine oder mehrere Kameras (A) und einen in vertikaler Richtung linear verschiebbaren Halter (2, 7) zum Halten eines Objekts (35) im horizontalen Betrachtungswinkelbereich
(xxxvii)eine oder mehrere Kameras (A) und einen drehbaren Halter (2, 7) zum Halten eines Objekts (35) im horizontalen Betrachtungswinkelbereich
(xxxviii) eine oder mehrere Kameras (A) und einen um eine vertikale Drehachse drehbaren Halter (2, 7) zum Halten eines Objekts (35) im horizontalen Betrachtungswinkelbereich.

4. Bildaufnahmesystem (1000) nach Anspruch 3, **dadurch gekennzeichnet, dass** die Komponente (2, 6, 7) eingerichtet ist, den horizontalen Betrachtungswinkelbereich (a) von dem horizontalen Betrachtungswinkelbereich ohne das Zusatzmodul (100) auf den horizontalen Betrachtungswinkelbereich (α) von 360° mit dem Zusatzmodul (100) zu erweitern.

5. Bildaufnahmesystem (1000) nach einem der vorangegangenen Ansprüche, **dadurch gekennzeichnet, dass** das Zusatzmodul (100) eine Beleuchtungseinrichtung (5a, 5b) aufweist, um ein im horizontalen Betrachtungswinkelbereich (a) angeordnetes Objekt (35) zu beleuchten.

6. Bildaufnahmesystem (1000) nach einem der vorangegangenen Ansprüche, **gekennzeichnet durch** eine Lichtquelle (B), welche nicht Bestandteil des Zusatzmoduls (100) ist und welches den horizontalen Betrachtungswinkelbereich ohne das Zusatzmodul (100) derart ausleuchtet, dass die durch die Lichtquelle (B) erzeugte Lichtintensität an jeder Stelle auf einer Mantelfläche eines Kreiszylinders mit einem Durchmesser von 20 cm und mit in vertikaler Richtung ausgerichteter Mittelachse, welche durch den Schnittpunkt der äußeren linearen Begrenzungslinien des horizontalen Betrachtungswinkelbereichs ohne das Zusatzmodul (100) verläuft, über eine vertikale Erstreckung von 20 cm um maximal 50 % von einem Mittelwert abweicht, welcher einen Mindestwert von 50 lx aufweist.

7. Bildaufnahmesystem (1000) nach einem der vorangegangenen Ansprüche, **dadurch gekennzeichnet, dass** das Zusatzmodul (100) eine Zusatzlichtquelle (5a, 5b) aufweist.

8. Bildaufnahmesystem (1000) nach Anspruch 7, **dadurch gekennzeichnet, dass** die Zusatzlichtquelle (5a, 5b) den durch das Zusatzmodul (100) erweiterten horizontalen Betrachtungswinkelbereich (α) derart ausleuchtet, dass die durch die Zusatzlichtquelle (5a, 5b) erzeugte Lichtintensität an jeder Stelle auf einer Mantelfläche eines Kreiszylinders mit einem Durchmesser von 20 cm und mit in vertikaler Richtung ausgerichteter Mittelachse, welche durch den Schnittpunkt der äußeren linearen Begrenzungslinien des horizontalen Betrachtungswinkelbereichs ohne das Zusatzmodul verläuft, über eine vertikale Erstreckung von 20 cm um maximal 50 % von einem Mittelwert abweicht, welcher einen Mindestwert von 50 lx aufweist.

9. Bildaufnahmesystem (1000) nach einem der vorangegangenen Ansprüche, **dadurch gekennzeichnet, dass** das Zusatzmodul (100) wenigstens eine weitere Komponente aus der nachfolgend angegebenen Gruppe aufweist:
(i) eine mechanische Komponente zur Hintergrund-Segmentierung,
(ii) eine mechanische Komponente zur Verkippung eines von dem Bildaufnahmesystem aufgenommenen Objekts,
(iii) eine Strukturbeleuchtungseinrichtung,
(iv) einen Halter (7) mit einem oder mehreren Markern (7a, 7b, 7c) zum Halten eines von dem Bildaufnahmesystem (1000) aufgenommenen Objekts (35),
(v) einen Halter (7) mit einem oder mehreren Markern (7a, 7b, 7c) zum Halten und Verkippen eines von dem Bildaufnahmesystem (1000) aufgenommenen Objekts (35).

10. Bildaufnahmesystem (1000) nach einem der Ansprüche 3 bis 9, **dadurch gekennzeichnet, dass** das Zusatzmodul (100)
- eine die wenigstens eine Komponente oder die wenigstens eine weitere Komponente aufnehmende Einhausung (1) oder
- eine die wenigstens eine Komponente oder die wenigstens eine weitere Komponente aufnehmende geschlossene Einhausung (1) aufweist.

11. Bildaufnahmesystem (1000) nach Anspruch 10, **dadurch gekennzeichnet, dass** die Einhausung (1) oder die geschlossene Einhausung (1) eine zylindersegmentförmige oder eine halbkreiszylindersegmentförmige Gestalt aufweist.

12. Bildaufnahmesystem (1000) nach einem der vorangegangenen Ansprüche, **dadurch gekennzeichnet, dass** eine Mehrzahl an Kameras (A) zur Bildaufnahme vorhanden sind, welche kreisförmig angeordnet sind und welche den horizontalen Betrachtungswinkelbereich ohne das Zusatzmodul (100) auf 180° ± 15° festlegen.

13. System (1000) umfassend
- ein Bildaufnahmesystem nach einem der vorangegangenen Ansprüche,
- einen Computer (F), welcher eingerichtet ist, aus einem von dem Bildaufnahmesystem (1000) aufgenommenen Objekt (35) ein virtuelles dreidimensionales Modell zu berechnen und durch Bildsynthese aus dem virtuellen dreidimensionalen Modell ein fotorealistisches Bild zu generieren und
- eine Anzeige, welche eingerichtet ist, das fotorealistisches Bild anzuzeigen.

14. Zentriersystem (1000) zum Bestimmen von Zentrierparametern zur Zentrierung eines Brillenglases in einer Brillenfassung mit einem System nach Anspruch 13.

15. Anpasssystem (1000) zum virtuellen Anpassen einer Brillenfassung an den Kopf eines Brillenträgers mit einem Zentriersystem nach Anspruch 14.

16. Zusatzmodul (100) für ein Bildaufnahmesystem (1000), mit welchem in einem Fall (i) Bilder des Gesichts einer Person über einen horizontalen Betrachtungswinkelbereich (α) von nicht mehr als 240° aufgenommen werden können und/oder in einem Fall (ii) Bilder des Gesichts der Person über einen vertikalen Betrachtungswinkelbereich (β=0°) von nicht mehr als 10° aufgenommen werden können, **gekennzeichnet durch**
(a) eine Schnittstelle (M1) zum lösbaren verbinden des Zusatzmoduls (100) mit dem Bildaufnahmesystem (1000), und
(b) eine Einrichtung (2, 2a, 2b, 6), um in dem Fall (i) den horizontalen Betrachtungswinkelbereich (a) des Bildaufnahmesystems (1000) auf 360° zu erweitern und/oder in dem Fall (ii) den vertikalen Betrachtungswinkelbereich (β) um mindestens 10° zu erweitern.
